(19) Europäisches Patentamt
European Patent Office
Office européen des brevets

(11) EP 4 693 495 A1

(12) **EUROPEAN PATENT APPLICATION**
published in accordance with Art. 153(4) EPC

(43) Date of publication:
**11.02.2026 Bulletin 2026/07**

(21) Application number: **24872794.3**

(22) Date of filing: **11.09.2024**

(51) International Patent Classification (IPC):
***H01M 4/525*** *(2010.01)* ***H01M 4/505*** *(2010.01)*
***H01M 10/0567*** *(2010.01)* ***H01M 10/0525*** *(2010.01)*
***H01M 4/02*** *(2006.01)*

(52) Cooperative Patent Classification (CPC):
**H01M 4/02; H01M 4/505; H01M 4/525; H01M 10/0525; H01M 10/0567;** Y02E 60/10

(86) International application number:
**PCT/KR2024/013838**

(87) International publication number:
**WO 2025/071086 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 KR 20230131252**
**02.09.2024 KR 20240118849**

(71) Applicant: **LG Energy Solution, Ltd.**
**Seoul 07335 (KR)**

(72) Inventors:
- **JI, Su Hyeon**
**Daejeon 34122 (KR)**
- **LEE, Chul Haeng**
**Daejeon 34122 (KR)**
- **LEE, Jung Min**
**Daejeon 34122 (KR)**
- **YEOM, Chul Eun**
**Daejeon 34122 (KR)**
- **KO, Jin Hyuck**
**Daejeon 34122 (KR)**

(74) Representative: **Hoffmann Eitle**
**Patent- und Rechtsanwälte PartmbB**
**Arabellastraße 30**
**81925 München (DE)**

# (54) LITHIUM SECONDARY BATTERY

(57) The present invention relates to a lithium secondary battery including a positive electrode, a negative electrode, a separator disposed between the positive electrode and the negative electrode, and a non-aqueous electrolyte, wherein the positive electrode includes a positive electrode active material, the positive electrode active material includes a lithium nickel-based oxide represented by a specific formula, the non-aqueous electrolyte includes a lithium salt, an organic solvent, a first additive, and a second additive, the first additive includes a compound represented by a specific formula, and the second additive includes a compound represented by a specific formula.

EP 4 693 495 A1

## Description

## TECHNICAL FIELD

### Cross-reference to Related Applications

This application claims priority from Korean Patent Application Nos. 10-2023-0131252, filed on September 27, 2023, and 10-2024-0118849, filed on September 2, 2024, the disclosures of which are incorporated by reference herein.

### Technical Field

The present invention relates to a lithium secondary battery, and more particularly, to a lithium secondary battery exhibiting excellent high-temperature lifespan characteristics, high-temperature storage characteristics, and thermal stability.

## BACKGROUND ART

Lately, there has been a rapid expansion in the application of lithium secondary batteries to power storage supply of large-area devices such as automobiles and power storage devices, as well as power supply of electronic devices such as electrical, electronic, communication, and computer devices, resulting in a rising demand for high-capacity, high-output, and high-stability secondary batteries.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, and the like may be used. In addition, as the positive electrode active material, lithium transition metal oxides such as lithium cobalt oxide ($LiCoO_2$), lithium nickel oxide ($LiNiO_2$), and lithium nickel-cobalt-manganese composite transition metal oxide may be used.

Meanwhile, currently, a lithium nickel-cobalt-manganese composite transition metal oxide having a nickel content of at least 70 mol% with respect to a transition metal is mainly being studied for increasing the energy density of a positive electrode. However, when the nickel content in the lithium nickel-cobalt-manganese composite transition metal oxide is increased, the positive electrode goes through degradation in thermal stability.

To make sure that the issue is prevented, lowering the nickel content in the lithium nickel-cobalt-manganese composite transition metal oxide requires an increase in driving voltage to achieve required energy density, and during these high-voltage conditions, side reactions induced by electrolyte degradation upon charging and discharging may result in degradation of a film formed on positive and negative electrodes or an electrode surface structure, leading to the elution of transition metal ions from the positive electrode surface. As such, the eluted transition metal ions are subjected to electrodeposition on the negative electrode, deteriorating the passivation capability of SEI, which causes the negative electrode to degrade.

The degradation of secondary batteries tends to be further accelerated with an increase in the potential of the positive electrode or exposure of the batteries to high temperatures.

Therefore, to address these issues, research and development efforts are underway to develop methods to form a durable film on positive and negative electrode surfaces from an initial activation process, thereby suppressing electrolyte side reactions and the elution of metal ions from a positive electrode, and improving the high-temperature lifespan characteristics and stability.

## DISCLOSURE OF THE INVENTION

## TECHNICAL PROBLEM

The present invention is designed to overcome the limitations described above, and thus an aspect of the present invention provides a lithium secondary battery using a lithium transition metal oxide with nickel content reduced to a certain level as a positive electrode active material, which exhibits improved high-temperature lifespan performance, storage performance, and thermal stability when driven at high voltages.

## TECHNICAL SOLUTION

[1] According to an aspect of the present invention, there is provided a lithium secondary battery including a positive electrode, a negative electrode, a separator disposed between the positive electrode and the negative electrode, and a non-aqueous electrolyte, wherein the positive electrode includes a positive electrode active material, the positive electrode active material includes a lithium nickel-based oxide represented by Formula 1 below, the non-aqueous electrolyte includes a lithium salt, an organic solvent, a first additive, and a second additive, the first additive includes a compound represented by Formula A below, and the second additive includes a compound represented by Formula C below.

[Formula 1] $Li_{1+x}[Ni_aCo_bMn_cM^1_d]O_2$

In Formula 1 above, x, a, b, c, and d satisfy $0 \leq x \leq 0.5$, $a+b+c+d = 1$, $0.5 \leq a \leq 0.7$, $0<b<0.2$, $0<c \leq 0.4$, and $0 \leq d \leq 0.2$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

[Formula A]

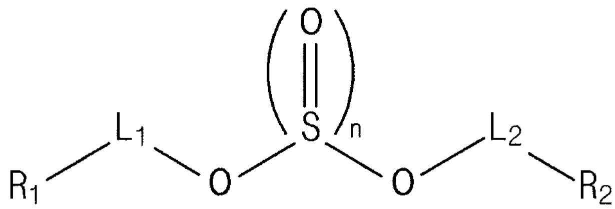

In Formula A above, n is 1 or 2, $L_1$ and $L_2$ are each independently a direct linkage or a substituted or unsubstituted alkylene group having 1 to 6 carbon atoms, $R_1$ and $R_2$ are each independently a substituent represented by Formula B below,

[Formula B]

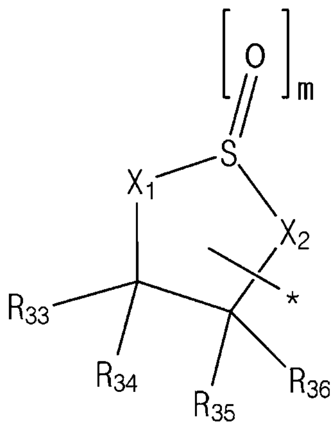

In Formula B above, m is 1 or 2, $X_1$ and $X_2$ are each independently -O- or $-C(R_{31})(R_{32})-$, provided that at least one of $X_1$ or $X_2$ is -O-, $R_{31}$ to $R_{36}$ are each independently hydrogen, an alkyl group having 1 to 6 carbon atoms, $-C(=O)-R_4$, or $-R_5-O-C(=O)-R_6$, $R_4$ and $R_6$ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms, $R_5$ is a substituted or unsubstituted alkylene group having 1 to 6 carbon atoms, substituents of $L_1$, $L_2$, $R_4$, $R_5$, and $R_6$ are each independently at least one selected from the group consisting of deuterium, -F, -Cl, -Br, -I, -CN, $-NO_2$, and $-SO_3$, * is a site bonded to $L_1$ or $L_2$, when both $L_1$ and $L_2$ are direct linkages, both $R_1$ and $R_2$ are not CS-7 below, and when both $L_1$ and $L_2$ are methylene groups and n is 2, both $R_1$ and $R_2$ are not CS-2 below.

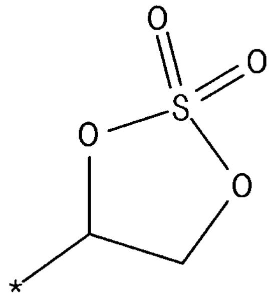

CS-2

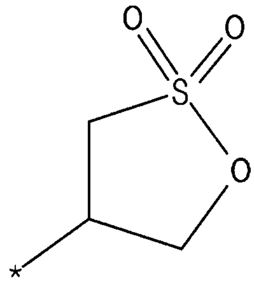

CS-7

[Formula C]

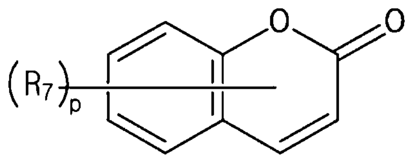

In Formula C above, $R_7$ includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and p is an integer selected from 0 to 6.

[2] The present invention provides the lithium secondary battery according to [1] above, wherein in Formula 1 above, a/b is 3.2 to 9.0.

[3] The present invention provides the lithium secondary battery according to [1] or [2] above, wherein in Formula 1 above, a/c is 1.5 to 2.8.

[4] The present invention provides the lithium secondary battery according to any one of [1] to [3] above, wherein in Formula 1 above, x, a, b, c, and d satisfy $0 \leq x \leq 0.2$, $a+b+c+d = 1$, $0.55 \leq a \leq 0.65$, $0 < b \leq 0.15$, $0.2 \leq c \leq 0.4$, $0 \leq d \leq 0.1$, $4.0 \leq a/b \leq 8.5$, and $1.6 \leq a/c \leq 2.6$.

[5] The present invention provides the lithium secondary battery according to any one of [1] to [4] above, wherein in Formula A above, $R_1$ and $R_2$ are each independently a substituent selected from the group consisting of CS-1 to CS-15 below.

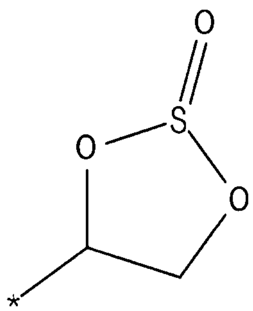

CS-1

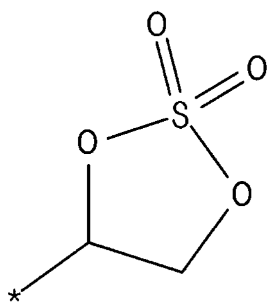

CS-2

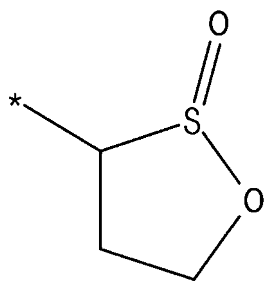

CS-3

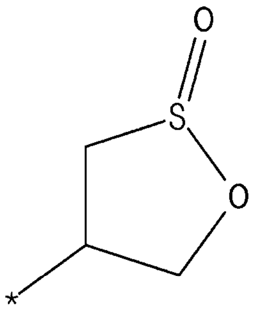
CS-4

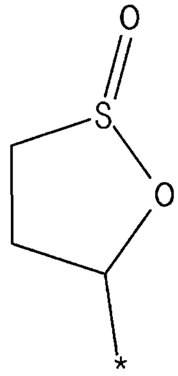
CS-5

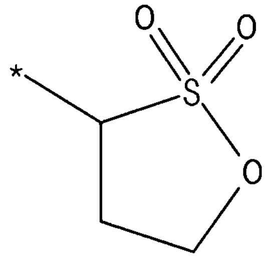
CS-6

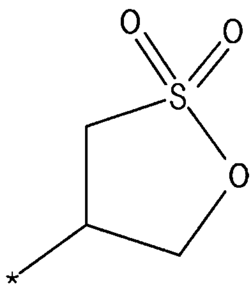
CS-7

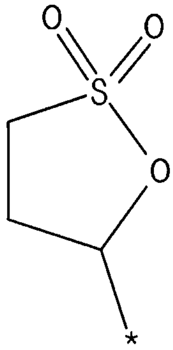
CS-8

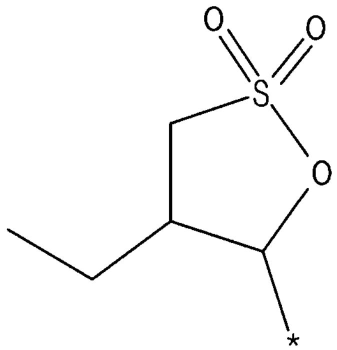
CS-9

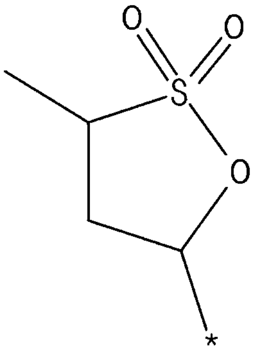
CS-10

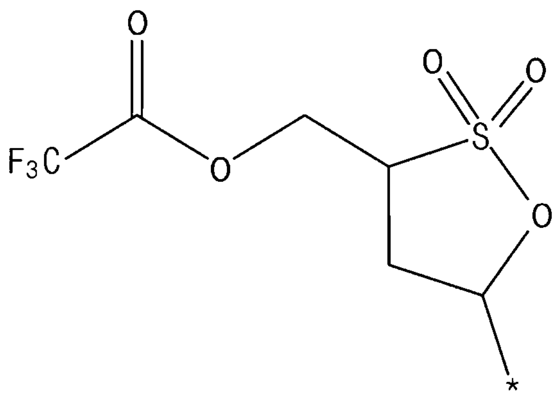
CS-11

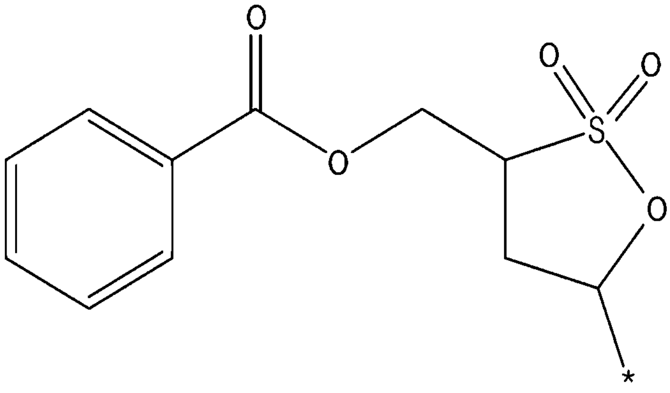

CS-12

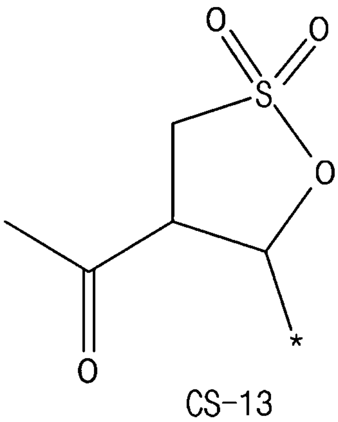

CS-13

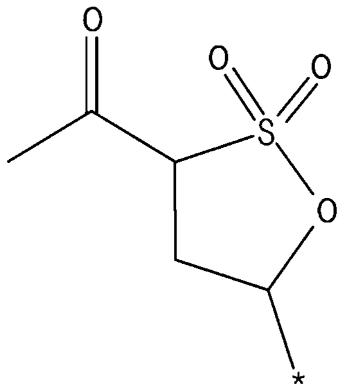

CS-14

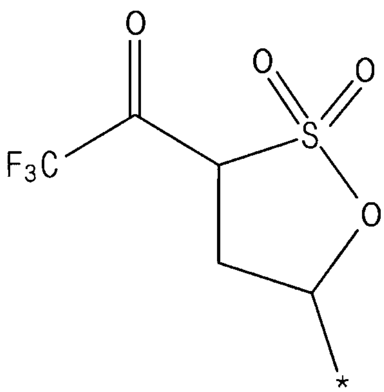

CS-15

[6] The present invention provides the lithium secondary battery according to any one of [1] to [5] above, wherein $R_1$ and $R_2$ are each independently a substituent selected from the group consisting of CS-1, CS-2, CS-5, CS-8, CS-10, and CS-11.

[7] The present invention provides the lithium secondary battery according to any one of [1] to [6] above, wherein $L_1$ and $L_2$ are methylene groups.

[8] The present invention provides the lithium secondary battery according to any one of [1] to [7] above, wherein the compound represented by Formula A above includes at least one selected from the group consisting of compounds A-1 to A-18 below.

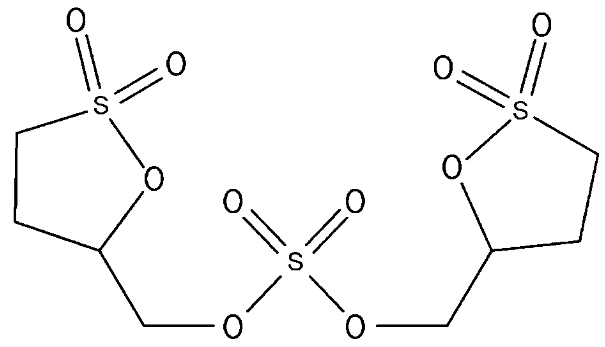

A-1

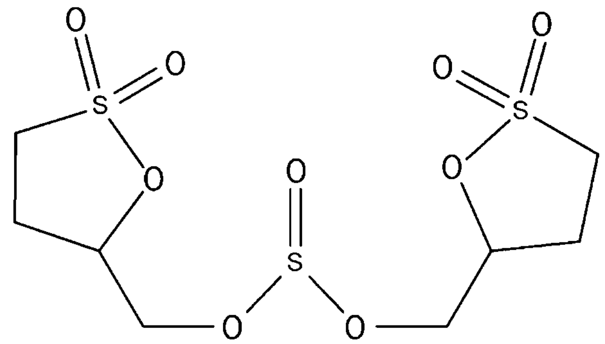

A-2

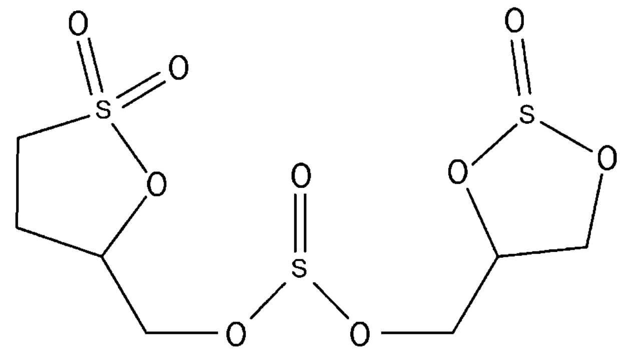

A-3

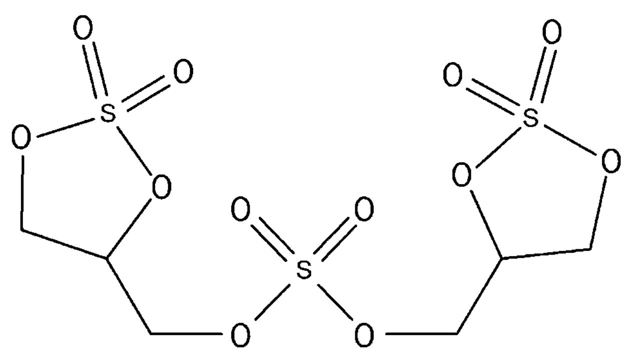

A-4

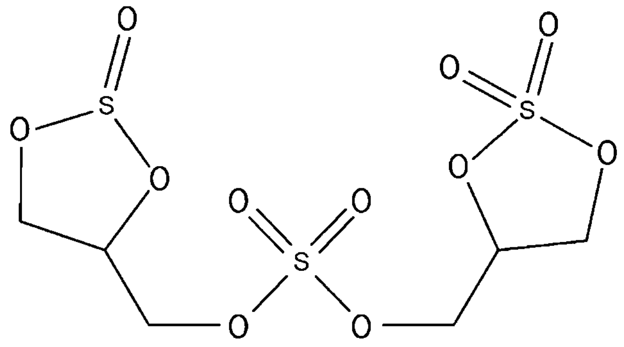

A-5

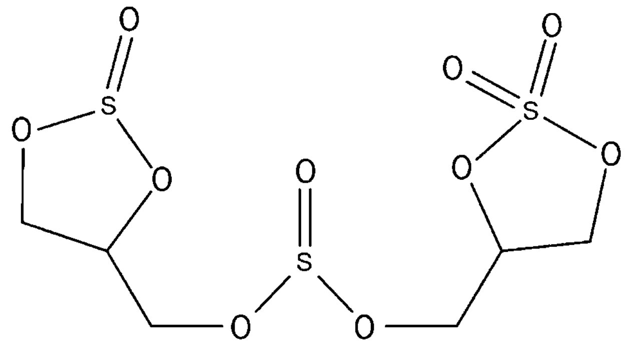

A-6

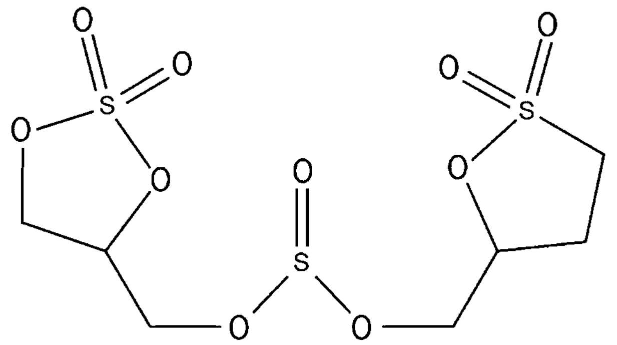

A-7

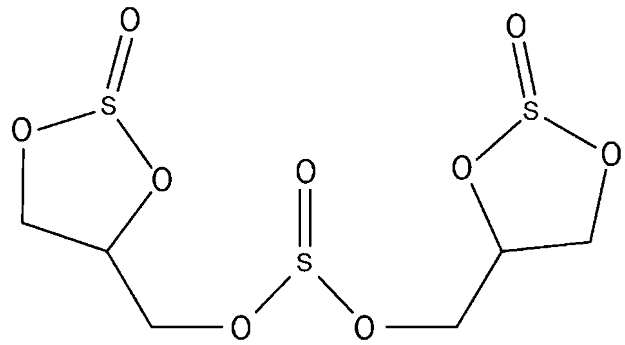

A-8

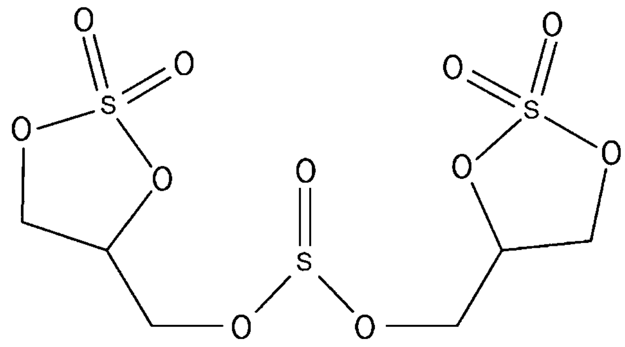

A-9

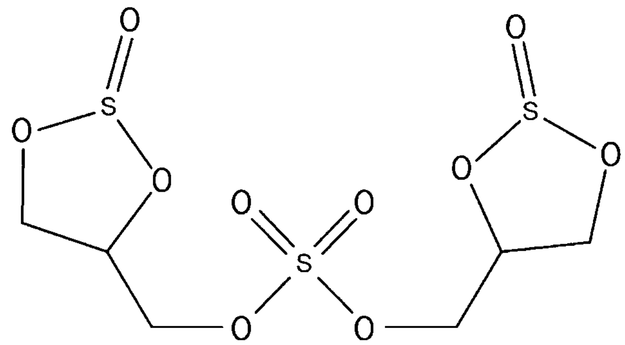

A-10

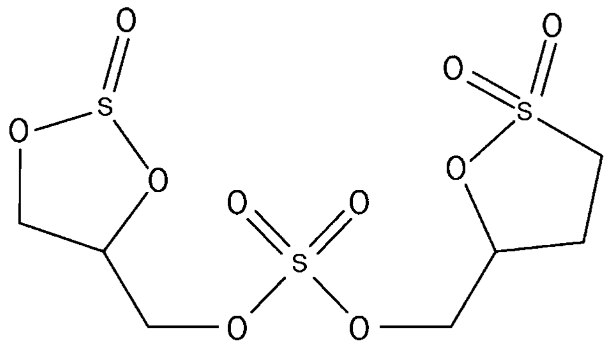

A-11

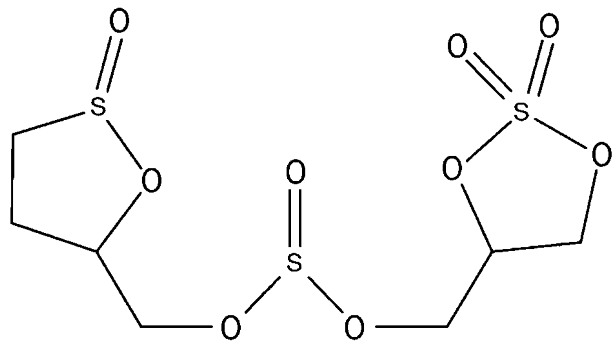

A-12

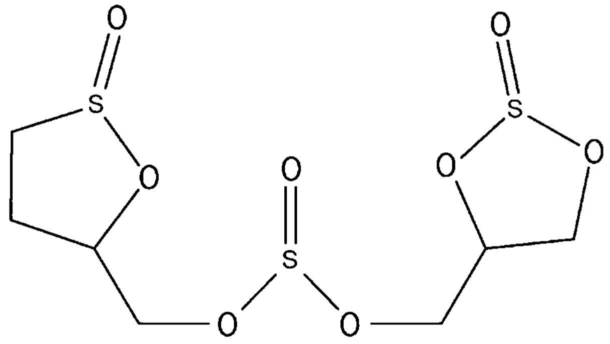

A-13

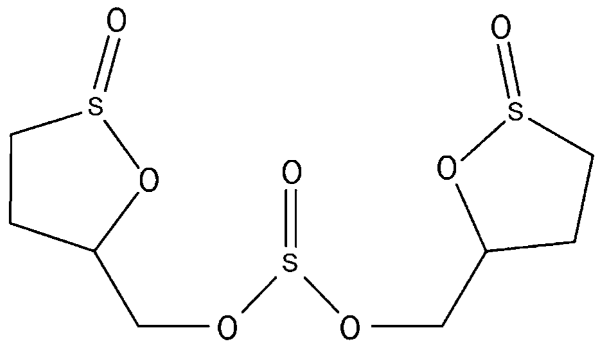

A-14

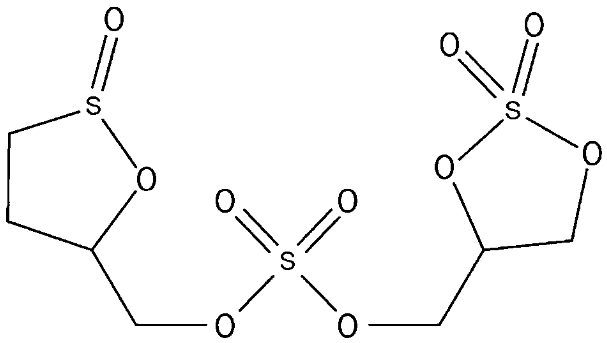

A-15

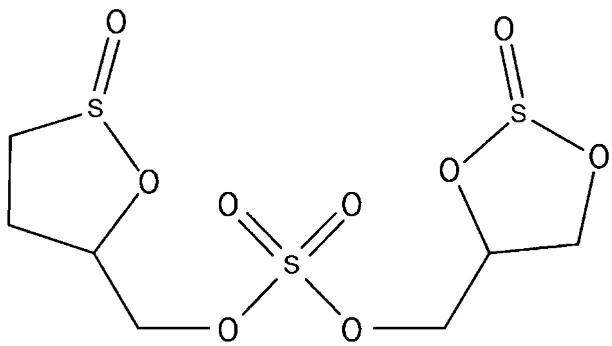

A-16

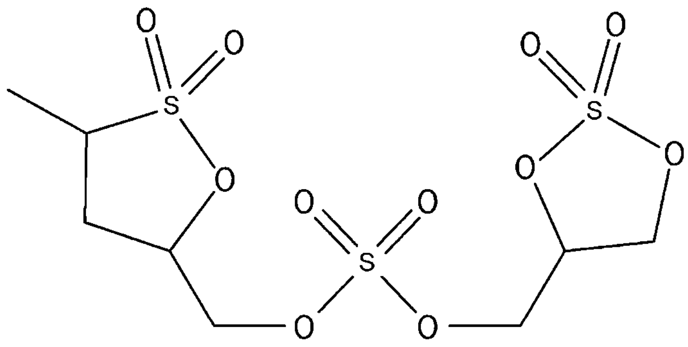

A-17

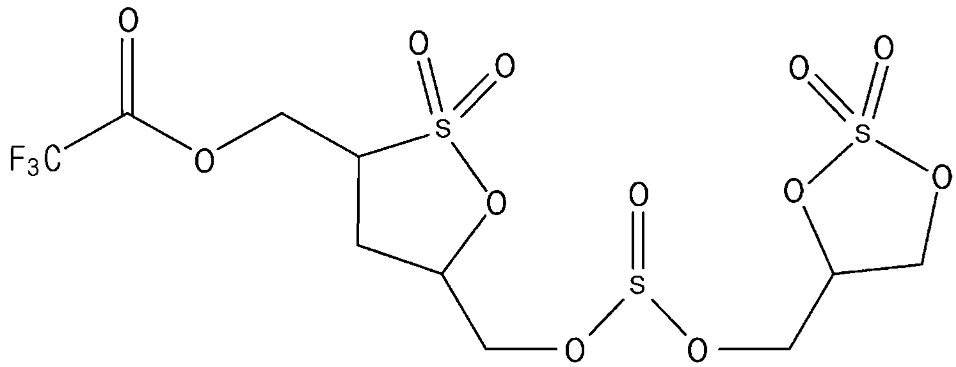

A-18

[9] The present invention provides the lithium secondary battery according to any one of [1] to [8] above, wherein the compound represented by Formula C above includes at least one selected from the group consisting of a compound represented by Formula C-1 below and a compound represented by Formula C-2 below.

[Formula C-1]

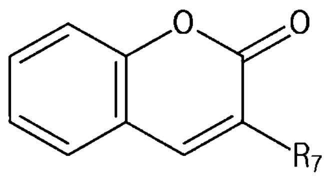

| [Formula C-2]

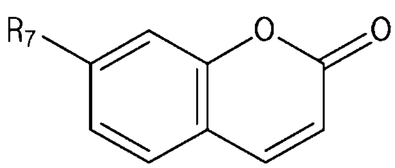

In Formulas C-1 and C-2 above, $R_7$ is the same as defined in Formula C above.

[11] The present invention provides the lithium secondary battery according to any one of [1] to [10] above, wherein the first additive and the second additive are present in a weight ratio of 12:1 to 0.5:1.

[12] The present invention provides the lithium secondary battery according to any one of [1] to [11] above, wherein the first additive is provided in an amount of 0.01 wt% to 12 wt% with respect to a total weight of the non-aqueous electrolyte.

[13] The present invention provides the lithium secondary battery according to any one of [1] to [12] above, wherein the second additive is provided in an amount of 0.01 wt% to 6 wt% with respect to a total weight of the non-aqueous electrolyte.

[14] The present invention provides the lithium secondary battery according to any one of [1] to [13] above, wherein the lithium secondary battery has a charge cut-off voltage of 4.3 V or greater upon driving.

[15] The present invention provides the lithium secondary battery according to any one of [1] to [14] above, wherein the lithium secondary battery has a nominal voltage of 3.68 V or greater.

## ADVANTAGEOUS EFFECTS

A lithium secondary battery according to the present invention includes a positive electrode containing a lithium nickel-based oxide satisfying a specific formula as a positive electrode active material, a first additive (a cyclic sulfur oxide represented by a specific formula) and a second additive (a coumarin-based compound represented by a specific formula), and accordingly, in an activation process of the lithium secondary battery, the second additive may rapidly decompose to form radicals, which may accelerate ring-opening reactions of the first additive having a bulky structure, and a durable film may be quickly and stably formed on positive/negative electrode surfaces from an initial activation process.

Accordingly, the lithium secondary battery, when driven at high voltages, may be provided with improved high-temperature lifespan characteristics and high-temperature storage characteristics along with reduced resistance, and may exhibit improved thermal stability.

## MODE FOR CARRYING OUT THE INVENTION

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the term "include", "comprise", or "have" used herein, specifies the presence of stated features, numbers, steps, elements, or combinations thereof, but does not preclude the presence or addition of one or more other features, numbers, steps, elements, or combinations thereof.

Meanwhile, prior to describing the present invention, unless otherwise specified in the present invention, "*" indicates a portion connected between ends of the same or different atoms or formulas.

In addition, as used herein, "$a_0$" and "$b_0$" in the description of "$a_0$ to $b_0$ carbon atoms" indicate the number of carbon atoms included in a specific functional group. That is, the functional group may include "$a_0$" to "$b_0$" carbon atoms. For example, the term "alkyl group having 1 to 5 carbon atoms" indicates an alkyl group including 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, $(CH_3)_2CHCH_2CH_2$-, and the like.

In addition, as used herein, both an alkyl group or an aryl group may be substituted or unsubstituted. Unless otherwise defined, the term "substituted" indicates that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, and the like.

The inventors of the present invention have conducted repeated studies to address an issue of degradation in high-temperature lifespan and storage characteristics of lithium secondary batteries resulting from electrolyte side reactions and positive electrode transition metal elution when the lithium secondary batteries using lithium nickel-based oxide represented by a specific formula as a positive electrode active material are driven at high voltages, and have found that when both a first additive and a second additive represented by a specific formula are included in a non-aqueous electrolyte, a durable film is stably and quickly formed on positive/negative electrodes during an initial activation process, and thus a lithium secondary battery exhibiting excellent high-temperature lifespan characteristics, storage characteristics, and thermal stability at high voltages is achievable, thereby completing the invention.

Hereinafter, the present invention will be described in detail.

A lithium secondary battery according to the present invention may include at least one of the following components, and may include any combination of technically feasible components among the following components.

## Lithium secondary battery

A lithium secondary battery according to the present invention includes a positive electrode, a negative electrode, a separator disposed between the positive electrode and the negative electrode, and a non-aqueous electrolyte, wherein the positive electrode includes a positive electrode active material, the positive electrode active material includes a lithium nickel-based oxide represented by Formula 1 below, the non-aqueous electrolyte includes a lithium salt, an organic solvent, a first additive, and a second additive, the first additive includes a compound represented by Formula A below, and the second additive includes a compound represented by Formula C below.

[Formula 1] $Li_{1+x}[Ni_aCo_bMn_cM^1{}_d]O_2$

In Formula 1 above, x, a, b, c, and d satisfy $0 \leq x \leq 0.5$, $a+b+c+d = 1$, $0.5 \leq a \leq 0.7$, $0<b<0.2$, $0<c \leq 0.4$, and $0 \leq d \leq 0.2$, and

$M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo,

[Formula A]

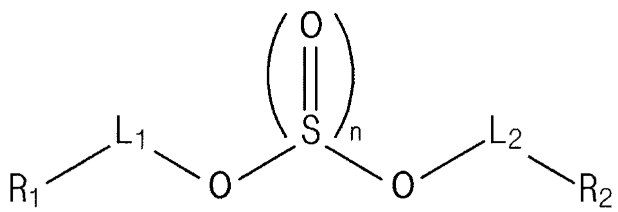

In Formula A above, n is 1 or 2, $L_1$ and $L_2$ are each independently a direct linkage or a substituted or unsubstituted alkylene group having 1 to 6 carbon atoms, $R_1$ and $R_2$ are each independently a substituent represented by Formula B below.

[Formula B]

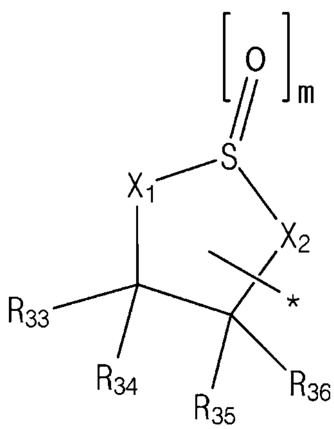

In Formula B above, m is 1 or 2, $X_1$ and $X_2$ are each independently -O- or -C($R_{31}$)($R_{32}$)-, provided that at least one of $X_1$ or $X_2$ is -O-, $R_{31}$ to $R_{36}$ are each independently hydrogen, an alkyl group having 1 to 6 carbon atoms, -C(=O)-$R_4$, or -$R_5$-O-C(=O)-$R_6$, $R_4$ and $R_6$ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms, $R_5$ is a substituted or unsubstituted alkylene group having 1 to 6 carbon atoms, substituents of $L_1$, $L_2$, $R_4$, $R_5$, and $R_6$ are each independently at least one selected from the group consisting

of deuterium, -F, -Cl, -Br, -I, -CN, $-NO_2$, and $-SO_3$, * is a site bonded to $L_1$ or $L_2$, when both $L_1$ and $L_2$ are direct linkages, both $R_1$ and $R_2$ are not CS-7 below, and when both $L_1$ and $L_2$ are methylene groups and n is 2, both $R_1$ and $R_2$ are not CS-2 below.

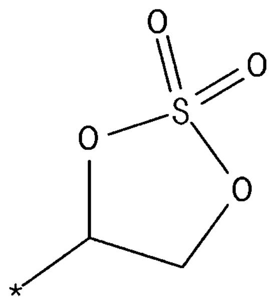
CS-2

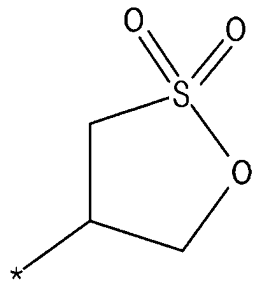
CS-7

[Formula C]

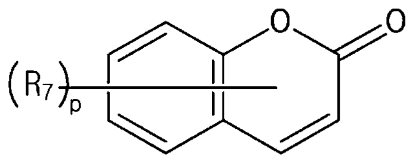

In Formula C above, $R_7$ includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and p is an integer selected from 0 to 6.

The lithium secondary battery includes a positive electrode, a negative electrode, a separator disposed between the positive electrode and the negative electrode, and a non-aqueous electrolyte. Specifically, the lithium secondary battery includes a positive electrode, a negative electrode facing the positive electrode, a separator disposed between the positive electrode and the negative electrode, and a non-aqueous electrolyte.

The lithium secondary battery may be manufactured according to methods generally known in the art. For example, the positive electrode, the negative electrode, and the separator between the positive electrode and negative electrode are sequentially stacked to form an electrode assembly, and then the electrode assembly is inserted into a battery case, and the non-aqueous electrolyte is injected int o the battery case to manufacture the lithium secondary battery of the present invention.

### (1) Positive electrode

The positive electrode includes a positive electrode active material. Specifically, the positive electrode may include a positive electrode current collector, and a positive electrode active material layer disposed on at least one surface of the positive electrode current collector, and the positive electrode active material may be included in the positive electrode active material layer.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may preferably include aluminum.

The positive electrode current collector may generally have a thickness of 3 μm to 500 μm.

The positive electrode collector may have fine irregularities formed on a surface thereof to improve bonding strength of a positive electrode active material. For example, the positive electrode current collector may be used in various forms such as a film, a sheet, a foil, a net, a porous body, a foam body, and a non-woven fabric body.

The positive electrode active material layer may be disposed on at least one surface of the positive electrode current collector, specifically, on one surface or both surfaces of the positive electrode current collector. The positive electrode active material layer may have a single-layer structure or a multi-layer structure of two or more layers.

The positive electrode active material includes a lithium nickel-based oxide represented by Formula 1 below,

[Formula 1] $Li_{1+x}[Ni_aCo_bMn_cM^1_d]O_2$

In Formula 1 above, x, a, b, c, and d satisfy $0 \le x \le 0.5$, $a+b+c+d = 1$, $0.5 \le a \le 0.7$, $0<b<0.2$, $0<c \le 0.4$, and $0 \le d \le 0.2$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The lithium nickel-based oxide is differentiated from, for example, a high-nickel lithium transition metal oxide containing greater than 70 mol% of nickel among total metals excluding lithium. The high-nickel lithium transition metal oxide is undesirable in that the oxide contains a large amount of nickel, which causes degradation in thermal stability, and particularly under high-voltage conditions, the oxide degenerates into rock salt form due to intralattice structural changes, which causes reduced lithium mobility and compromised performance.

Meanwhile, the lithium nickel-based oxide, having a lower content of nickel than the high-nickel lithium transition metal oxide, requires to be driven at high voltages (e.g., 4.3 V or greater) to increase the energy density of a positive electrode. However, when the lithium nickel-based oxide is driven at such high voltages, oxygen desorption is caused due to changes in the oxidation number of nickel and cobalt, thereby intensifying electrolyte side reactions, resulting in significant degradation in lifespan performance and storage performance.

The lithium secondary battery according to the present invention, using a lithium nickel-based oxide represented by Formula 1 above as a positive electrode active material, uses a combination of a first additive and a second additive to be described below, thereby achieving both high energy density and excellent lifespan and storage performance. The lithium secondary battery of the present invention may quickly and stably form a film having reduced resistance and excellent durability on a positive electrode by promoting the ring-opening reaction of the first additive through the second additive, and in particular, provides improvement in high-temperature lifespan performance, high-temperature storage performance, and thermal stability when the use of high voltage is required.

Meanwhile, a lithium nickel-based oxide containing less than 50 mol% of nickel (Ni) among total metals excluding lithium hardly achieves high capacity. In addition, high nickel lithium transition metal oxides such as $Li[Ni_{0.8}Co_{0.1}Mn_{0.1}]O_2$ and $Li[Ni_{0.86}Co_{0.07}Mn_{0.07}Al_{0.02}]O_2$, have a high ratio of Ni among transition metals or a high molar ratio of Ni/Mn, and exhibit substantial axial changes in the lattice due to the increase and decrease in Ni oxidation number during a charge/discharge process, and thus undergo intensified surface side reactions by Ni, which is unstable in terms of energy, thereby hardly having a performance improvement effect by forming positive/negative electrode films through the first and second additives. In addition, high nickel lithium transition metal oxides such as $Li[Ni_{0.8}Co_{0.1}Mn_{0.1}]O_2$ and $Li[Ni_{0.86}Co_{0.05}Mn_{0.07}Al_{0.02}]O_2$ have a high molar ratio of Ni/Mn, and thus, when driven at high voltage, undergo phase transitions, leading to the formation of a substantial amount of rock-salt structure on a surface. This hinders both lithium ion intercalation/deintercalation and the formation of a positive electrode film by the combination of the additives. In addition, lithium cobalt-based oxides that contain a relatively large amount of cobalt (Co), such as $Li[Ni_{0.6}Co_{0.2}Mn_{0.2}]O_2$ and $LiCoO_2$, has a high ratio of Co in the transition metal, which increases the irreversibility in the structure, and thus hardly have a performance improvement effect by forming a positive electrode film through additives. Therefore, if not the lithium nickel-based oxide represented by Formula 1 above, improving the desired lifespan performance and storage performance is hardly achievable even with the use of a combination of the first and second additives.

In Formula 1 above, x may satisfy $0 \le x \le 0.5$, specifically satisfy $0 \le x \le 0.2$, and more specifically satisfy $0 \le x \le 0.1$. x indicates a molar ratio of lithium in lithium nickel-based oxide particles, and when the above range is satisfied, the positive electrode active material may form a stable layered crystal structure.

In Formula 1 above, a may satisfy $0.5 \le a \le 0.7$, specifically satisfy $0.52 \le a \le 0.68$, and more specifically satisfy $0.55 \le a \le 0.65$. a indicates a molar ratio of nickel among total metals excluding lithium in lithium nickel-based oxide particles, and when the above range is satisfied, as described above, high-temperature storage characteristics, high-temperature lifespan characteristics, and thermal stability may be excellent upon driving at high voltages.

In Formula 1 above, b may satisfy $0<b<0.2$, specifically satisfy $0<b \le 0.18$, more specifically satisfy $0<b \le 0.16$, and even more specifically satisfy $0<b \le 0.15$. b indicates a molar ratio of Co among total metals excluding lithium in the lithium nickel-based oxide represented by Formula 1 above, and when the above range is satisfied, lowering the Co content may offer benefits in cost, and satisfactory resistance and output characteristics, and increasing the Mn ratio may enhance the structural stability of a positive electrode active material.

In Formula 1 above, c may satisfy $0<c \le 0.4$, specifically satisfy $0.1 \le c \le 0.4$, more specifically satisfy $0.15 \le c \le 0.4$, and even more specifically satisfy $0.2 \le c \le 0.4$. c indicates a molar ratio of Mn among total metals excluding lithium in the lithium nickel-based oxide represented by Formula 1 above, and when the above range is satisfied, the structural stability of a positive electrode active material may be enhanced.

In Formula 1 above, $M^1$ may be considered as a doping element of lithium nickel-based oxide, and specifically, $M^1$ may be at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. In this case, d may satisfy $0 \le d \le 0.2$, specifically satisfy $0 \le d \le 0.15$, and more specifically satisfy $0 \le d \le 0.10$. d indicates a

molar ratio of the $M^1$ element among total metals excluding lithium in the lithium nickel-based oxide represented by Formula 1 above, and when the above range is satisfied, promoting particle growth upon firing of a positive electrode active material or improving crystal structure stability may be achieved.

Meanwhile, in Formula 1 above, a/b may be 3.2 to 9.0, specifically 4.0 to 8.5, more specifically 5.0 to 8.0, and even more specifically 5.5 to 7.0. When the above range is satisfied, high capacity may be achieved by including a high content of nickel (Ni), and the crystal structure of a positive electrode may not collapse after the achieving of high capacity, and thus lifespan characteristics are excellent. In addition, when the cobalt (Co) content is high, an irreversible film is formed to be thick on positive/negative electrode surfaces, but when the above range of a/b is satisfied, the thickness of the irreversible film is reduced, and thus the film may be stably formed through the first additive and the second additive, enabling batteries to have excellent electrochemical characteristics.

In Formula 1 above, a/c may be 1.5 to 2.8, specifically 1.6 to 2.6, more specifically 1.7 to 2.4, more specifically 1.8 to 2.3, and more specifically 1.9 to 2.1. When the above range is satisfied, manganese (Mn) effectively inhibits variability in a c-axis direction within a layered structure during charging and discharging, while nickel (Ni) enables stable capacity, allowing batteries to have excellent electrochemical properties.

The positive electrode active material may be included in an amount of 80 wt% to 99 wt%, preferably 92 wt% to 98.5 wt%, with respect to a total weight of the positive electrode active material layer, in consideration of exhibiting sufficient capacity of the positive electrode active material.

The positive electrode active material layer may further include a binder and a conductive material, along with the positive electrode active material.

The binder is a component that supports the binding of an active material and a conductive material and the binding to a collector, and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably include polyvinylidene fluoride.

The binder may be included in an amount of 1 wt% to 20 wt%, preferably 1.2 wt% to 10 wt% in the positive electrode active material layer for the purpose of sufficiently securing the binding strength between components such as the positive electrode active material.

The conductive material may be used to support and improve the conductivity of a secondary battery, and is not particularly limited as long as it has conductivity without causing chemical changes in batteries. Specifically, the positive electrode conductive material may include at least one selected the group consisting of graphite such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbon; metal powder such as aluminum and nickel powder; conductive whiskers such as zinc oxide and potassium titanate; conductive metal oxides such as titanium oxide; and polyphenylene derivatives, and may preferably include carbon nanotubes for the purpose of improving conductivity.

The conductive material may be included in an amount of 0.1 wt% to 20 wt%, preferably 0.1 wt% to 10 wt%, and more specifically 0.3 wt% to 5 wt% in the positive electrode active material layer to sufficiently secure electrical conductivity.

The positive electrode active material layer may have a thickness of 30 μm to 400 μm, preferably 40 μm to 200 μm.

The positive electrode may be manufactured according to a typical method for manufacturing a positive electrode. For example, the positive electrode active material, the positive electrode binder, and/or the positive electrode conductive material may be mixed in a positive electrode solvent to prepare a positive electrode slurry, and the positive electrode slurry may be applied onto the positive electrode current collector and then dried and roll-pressed to prepare the positive electrode.

The positive electrode solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

The positive electrode slurry may have a solid content of 40 wt% to 90 wt%, specifically 50 wt% to 80 wt%.

In another method, the positive electrode may be prepared by casting the positive electrode slurry on a separate support and then laminating a film separated from the support on the positive electrode current collector.

### (2) Negative electrode

The negative electrode may face the positive electrode.

The negative electrode includes a negative electrode active material, Specifically, the negative electrode may include a negative electrode current collector, and a negative electrode active material layer disposed on at least one surface of the negative electrode current collector, and the negative electrode active material may be included in the negative electrode active material layer.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used.

The negative electrode current collector may generally have a thickness of 3 $\mu$m to 500 $\mu$m.

In addition, the negative electrode current collector, like the positive electrode current collector, may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer may be placed on the negative electrode current collector, and may specifically be placed on one surface or both surfaces of the negative electrode current collector. The negative electrode active material layer may have a single-layer structure or a multi-layer structure of two or more layers.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a (semi) metal oxide which may be doped and dedoped with lithium such as $SiO_\beta$ ($0<\beta<2$), $SnO_2$, vanadium oxide, and lithium vanadium oxide; or a composite including the (semi) metallic compound and the carbonaceous material such as a SiC composite or a Sn-C composite, and any one thereof or a mixture of two or more thereof may be used.

In addition, a metallic lithium thin film may be used as the negative electrode active material. In addition, as the carbon material, low crystalline carbon, high crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The negative electrode active material layer may include the negative electrode active material in an amount of 60 wt% to 99 wt%, preferably 75 wt% to 95 wt%.

Meanwhile, the negative electrode active material layer may further include a conductive material and a binder optionally, in addition to the negative electrode active material.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 1 wt% to 30 wt%, preferably 1 wt% to 20 wt%, and more preferably 1 wt% to 10 wt%, with respect to a total weight of the negative electrode active material layer.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt%, with respect to a total weight of the negative electrode active material layer.

The negative electrode active material layer may have a thickness of 10 $\mu$m to 200 $\mu$m, preferably 20 $\mu$m to 150 $\mu$m.

The negative electrode may be manufactured according to a typical method for manufacturing a negative electrode. For example, the negative electrode active material, the negative electrode conductive material, and/or the negative electrode conductive material may be mixed in a negative electrode solvent to prepare a negative electrode slurry, and the negative electrode slurry may be applied onto a negative electrode current collector, and then dried and rolled to prepare the negative electrode.

The negative electrode solvent may include at least one selected from the group consisting of distilled water, ethanol, methanol, and isopropyl alcohol, preferably distilled water, in terms of facilitating the dispersion of components of the negative electrode slurry.

The negative electrode slurry may have a solid content of 30 wt% to 80 wt%, specifically 40 wt% to 70 wt%.

The negative electrode may be prepared by casting a separate support with the negative electrode slurry and then laminating the negative electrode current collector with a film separated from the support.

**(3) Separator**

The separator may be placed between the positive electrode and the negative electrode.

In addition, a typically used porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer component as the separator may be used to secure heat resistance or mechanical strength, and the separator having a single layer or multilayer structure may be used.

**(4) Non-aqueous electrolyte**

The non-aqueous electrolyte includes a lithium salt, an organic solvent, a first additive, and a second additive.

**1) Lithium salt**

As a lithium salt used in the present invention, various lithium salts commonly used in non-aqueous electrolytes for lithium secondary batteries may be used without limitation. For example, the lithium salt may include $Li^+$ as a cation, and may include at least any one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$ as an anion.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). Specifically, the lithium salt may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$).

The nonaqueous electrolyte may include the lithium salt at a concentration of 0.5 M to 5 M, specifically 0.8 M to 4 M, and more specifically 0.8 M to 2.0 M. When the concentration of the lithium salt satisfies the above range, lithium ion yield ($Li^+$ transference number) and the dissociation degree of lithium ions are improved, and accordingly, batteries may have improved output characteristics.

**2) Organic solvent**

An organic solvent is a non-aqueous solvent commonly used in lithium secondary batteries, and is not particularly limited as long as its decomposition due to an oxidation reaction or the like may be minimized in the charging/discharging process of secondary batteries.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate lithium salt in an electrolyte due to high permittivity as a highly viscous organic solvent, and specifically may include at least one organic solvent selected from the group consisting of ethylene carbonate (EC), fluoroethylene carbonate (FEC), propylene

carbonate (PC), 1,2-butylene carbonate, 2,3-butylene carbonate, 1,2-pentylene carbonate, 2,3-pentylene carbonate, and vinylene carbonate, and may more specifically include at least one selected from the group consisting of ethylene carbonate (EC) and fluoroethylene carbonate (FEC), and may even more specifically include ethylene carbonate (EC).

The linear carbonate organic solvent is an organic solvent having low viscosity and low permittivity, and may specifically include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and may more specifically include at least one selected from the group consisting of ethylmethyl carbonate (EMC) and diethyl carbonate (DEC), and may more specifically include ethylmethyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, specifically a volume ratio of 10:90 to 25:75. When the mixing ratio of the cyclic carbonate-based organic solvent and the linear carbonate-based organic solvent satisfies the above range, both high permittivity and low viscosity are satisfied, and excellent ionic conductivity may be achieved.

In addition, in order to prepare an electrolyte having high ionic conductivity, the organic solvent may further include at least one ester-based organic solvent selected from the group consisting of a linear ester-based organic solvent and a cyclic ester-based organic solvent, along with at least one carbonate-based organic solvent selected from the group consisting of the cyclic carbonate-based organic solvent and the linear carbonate-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based solvent may specifically include at least one selected from the group consisting of γ-butyrolactone, γ-valerolactone, γ-caprolactone, o-valerolactone, and ε-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, and a nitrile-based organic solvent may be further included.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but is the embodiment is not limited thereto.

The glyme-based solvent, as a solvent having higher permittivity and a lower surface tension than a linear carbonate-based organic solvent, and being less reactive with metal, may include at least one selected from the group consisting of dimethoxyethane (glyme, DME), diethoxyethane, diglyme, tri-glyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

### 3) First additive

The first additive includes a compound represented by Formula A below.

[Formula A]

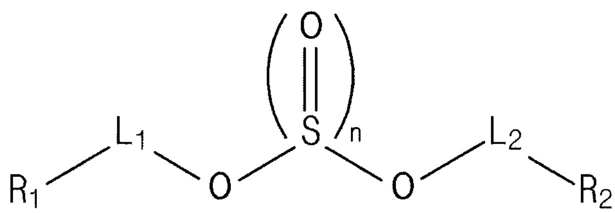

In Formula A above, n is 1 or 2, $L_1$ and $L_2$ are each independently a direct linkage or a substituted or unsubstituted alkylene group having 1 to 6 carbon atoms, $R_1$ and $R_2$ are each independently a substituent represented by Formula B below.

] [Formula B]

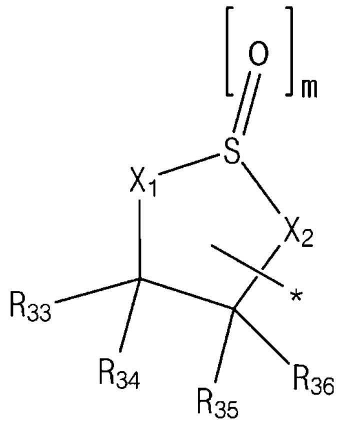

In Formula B above, m is 1 or 2, $X_1$ and $X_2$ are each independently -0- or -C($R_{31}$)($R_{32}$)-, provided that at least one of $X_1$ or $X_2$ is -O-, $R_{31}$ to $R_{36}$ are each independently hydrogen, an alkyl group having 1 to 6 carbon atoms, -C(=O)-$R_4$, or -$R_5$-O-C(=O)-$R_6$, $R_4$ and $R_6$ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms, $R_5$ is a substituted or unsubstituted alkylene group having 1 to 6 carbon atoms, substituents of $L_1$, $L_2$, $R_4$, $R_5$, and $R_6$ are each independently at least one selected from the group consisting of deuterium, -F, -Cl, -Br, -I, -CN, -$NO_2$, and -$SO_3$, * is a site bonded to $L_1$ or $L_2$, when both $L_1$ and $L_2$ are direct linkages, both $R_1$ and $R_2$ are not CS-7 below, and when both $L_1$ and $L_2$ are methylene groups and n is 2, both $R_1$ and $R_2$ are not CS-2 below.

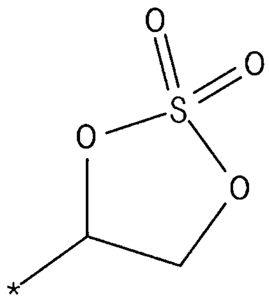

CS-2

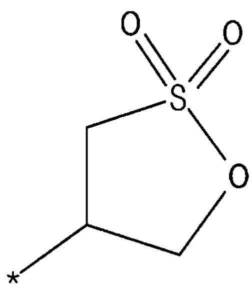

CS-7

The compound represented by Formula A above has a sulfur oxide structure at the center and a cyclic sulfur oxide structure at both ends.

By adopting this chemical structure, the compound represented by Formula A above may induce stable formation of anions when applied as a non-aqueous electrolyte additive, and furthermore, may facilitate the formation of a stable SEI layer. In particular, cyclic sulfur oxide additives (e.g., 1,3-propane sultone), which have been typically used as electrolyte additives are structurally unstable, leading to undesired side reactions and likely generating toxic substances, whereas the compound represented by Formula A above improves chemical reaction stability by connecting a chemically unstable reactive site through a linker, and maintains a cyclic structure form, reducing undesired side reactions and allowing additives to fully participate in the reaction of forming an SEI film. In addition, the compound represented by Formula A above exhibits enhanced reaction surface coverage due to an increase in the size of unit body, enabling efficient formation of an SEI film even with a small amount. Accordingly, using the compound represented by Formula A above as an electrolyte additive may result in the formation of a more stable SEI layer compared to typical additives.

Specifically, in the compound represented by Formula A above, $R_1$ and $R_2$ may each independently be selected from the group consisting of CS-1 to CS-15 below:

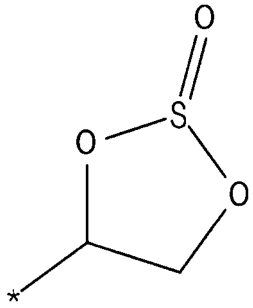

CS-1

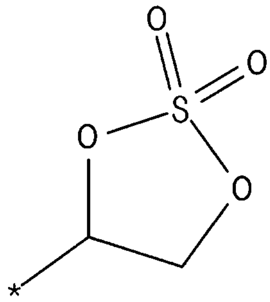

CS-2

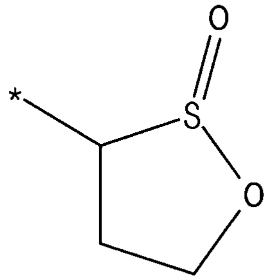

CS-3

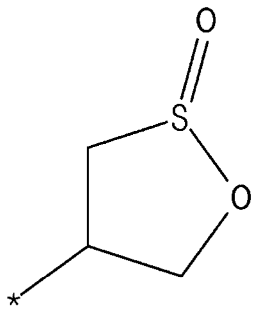

CS-4

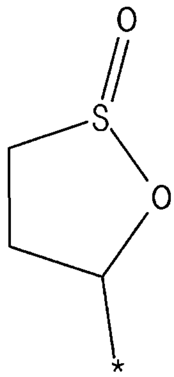

CS-5

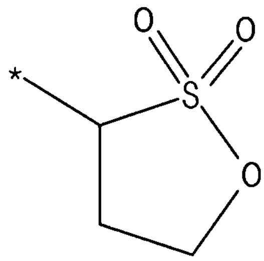

CS-6

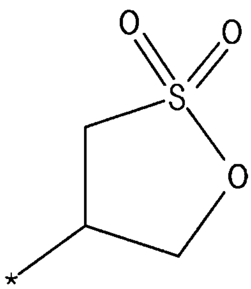

CS-7

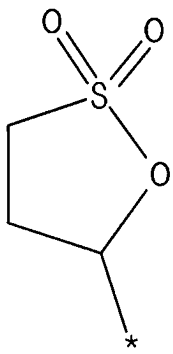

CS-8

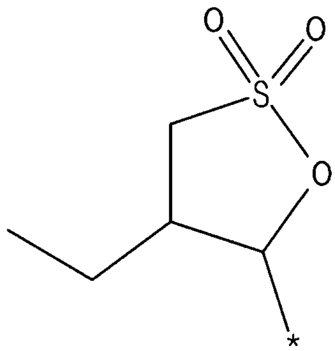

CS-9

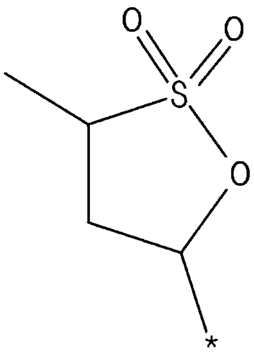

CS-10

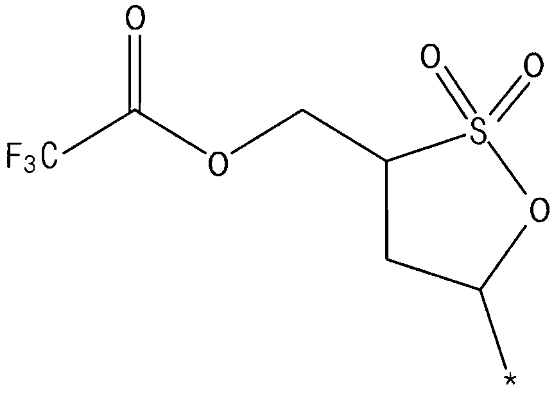

CS-11

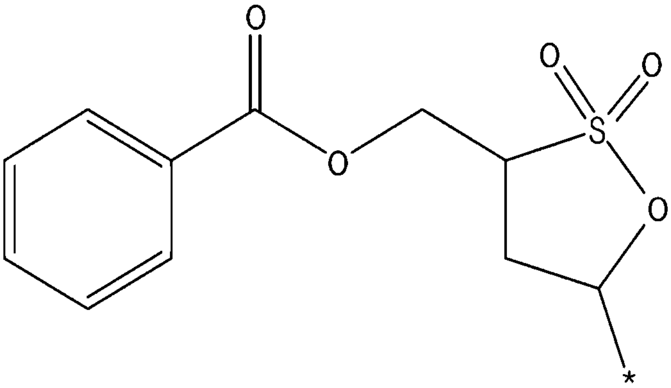

CS-12

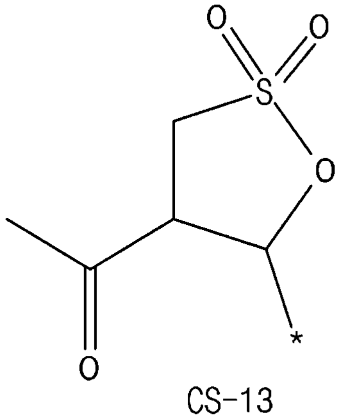

CS-13

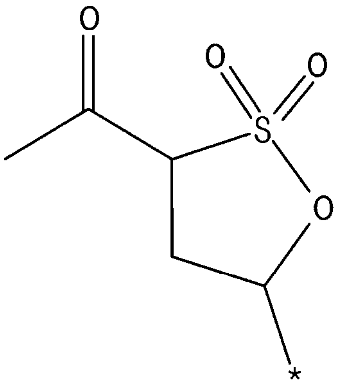

CS-14

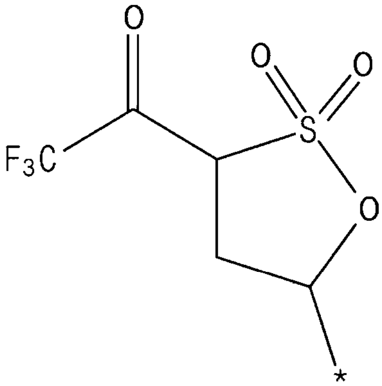

CS-15

The above-listed substituent structures CS-1 to CS-15 are preferred examples of $R_1$ and $R_2$ of Formula A, and when the substituents of CS-1 to CS-15 are applied as $R_1$ and $R_2$ of Formula A, the compound may exhibit excellent structural stability overall and effectively serve as a non-aqueous electrolyte additive. In particular, it is preferable that $R_1$ and $R_2$ are each independently any one selected from the group consisting of CS-1, CS-2, CS-5, CS-8, CS-10, and CS-11 to ensure structural stability and ease of synthesis.

Meanwhile, in the compound represented by Formula A above of the present invention, when both $L_1$ and $L_2$ are direct linkages and $R_1$ and $R_2$ are CS-7, or when both $L_1$ and $L_2$ are methylene groups and n is 2, and both $R_1$ and $R_2$ are CS-2, the compound itself exhibits low structural stability and may thus be easily decomposed, and accordingly, the synthesis of the compound itself may hardly be achieved. In particular, compounds satisfying the above conditions may have ring-shaped $R_1$ and $R_2$ structures that are easily decomposed during the synthesis process, and even when

synthesized in the end, may be easily decomposed during storage, with significantly low synthetic yield. Therefore, the present invention excludes the compounds in which both $L_1$ and $L_2$ are direct linkages and $R_1$ and $R_2$ are CS-7, and in which n is 2 and both $R_1$ and $R_2$ are CS-2.

In the compound represented by Formula A above, $L_1$ and $L_2$ may each independently be a direct linkage, a methylene group, or an ethylene group, and in particular, may preferably be a methylene group. When $L_1$ and $L_2$ are methylene groups, the compound may be readily synthesized and be prevented from being decomposed after synthesis.

More specifically, it may be particularly preferable that the compound represented by Formula A above includes at least one selected from the group consisting of compounds A-1 to A-18 below:

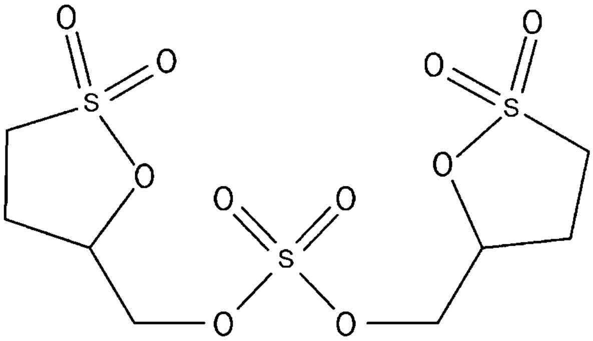

A-1

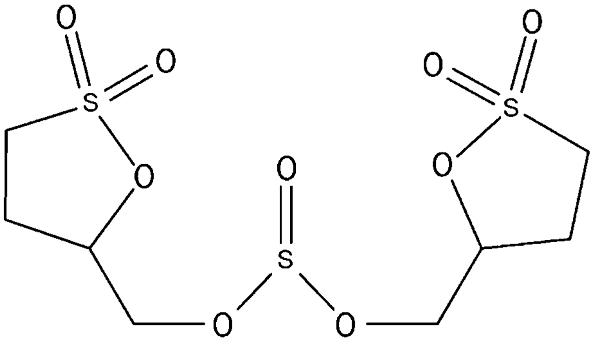

A-2

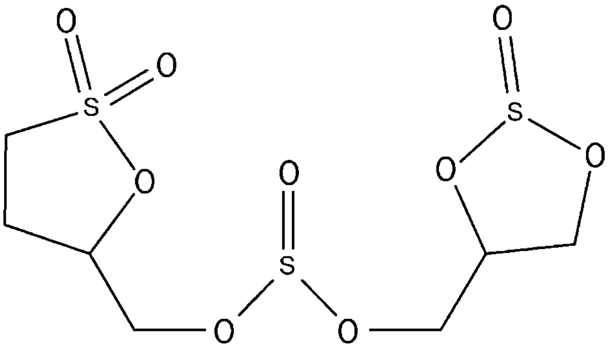

A-3

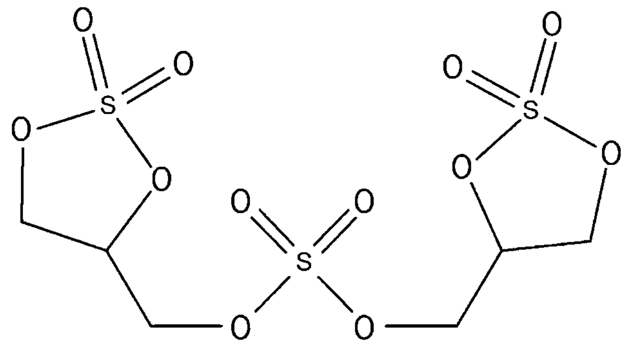

A-4

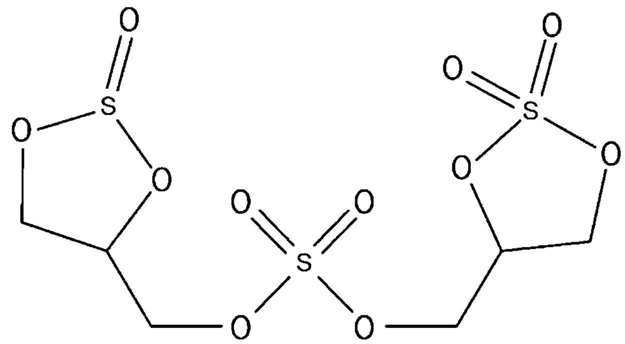

A-5

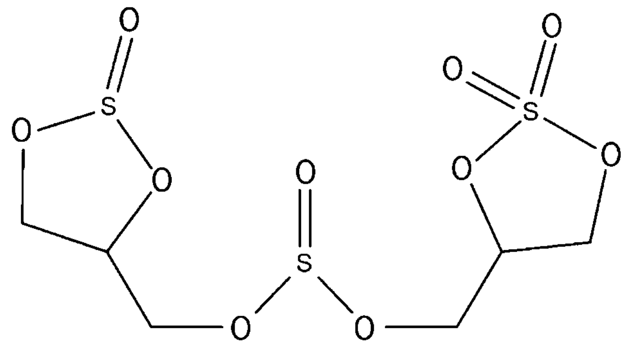

A-6

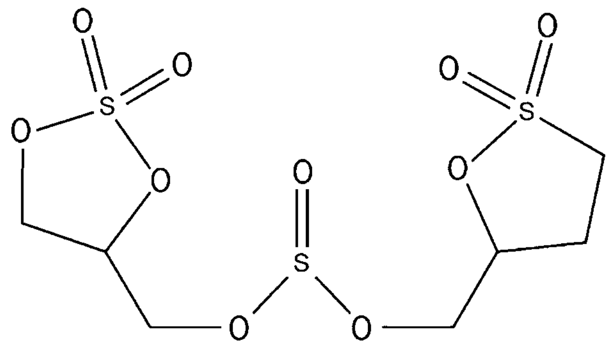

A-7

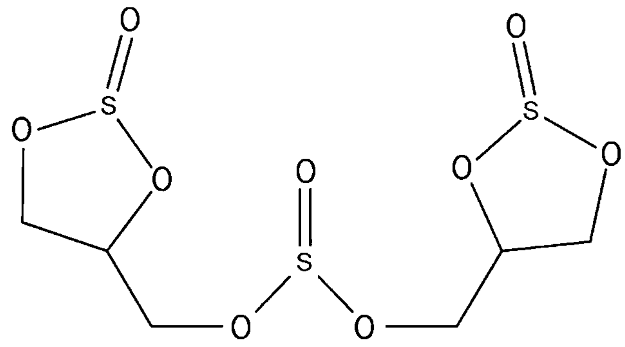

A-8

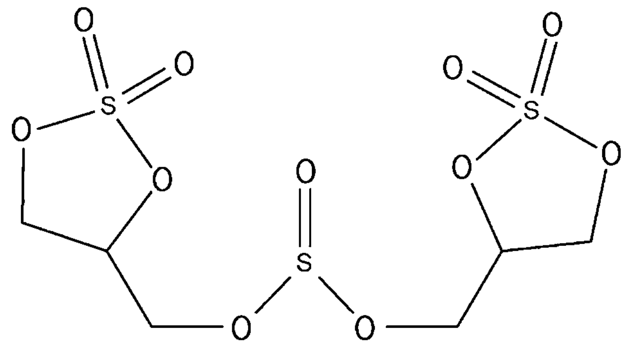

A-9

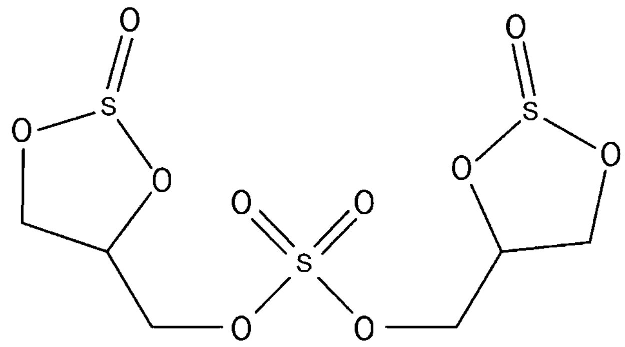

A-10

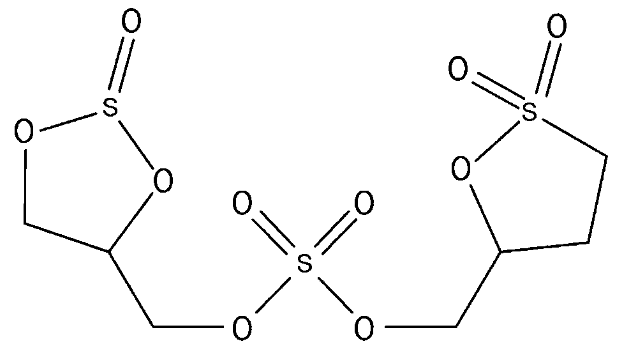

A-11

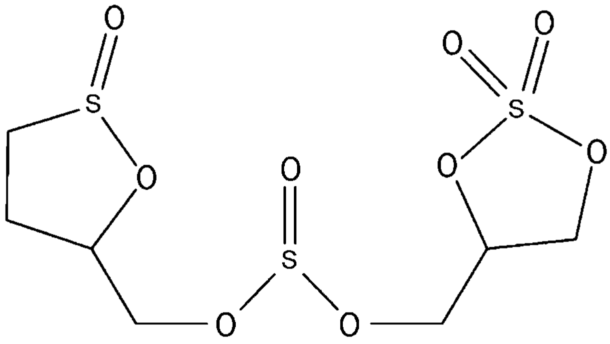

A-12

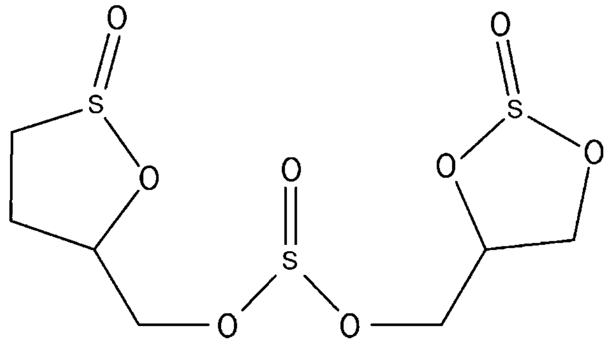

A-13

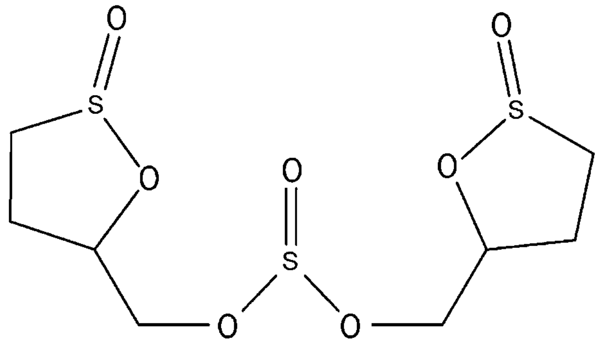

A-14

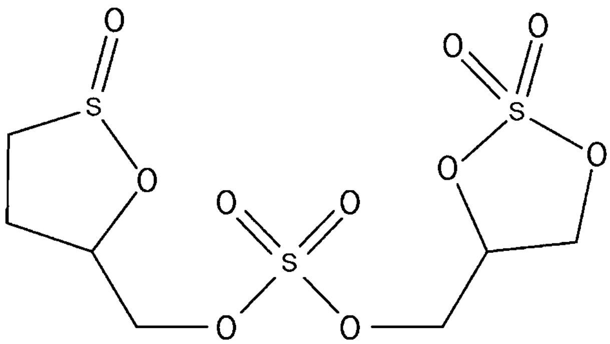

A-15

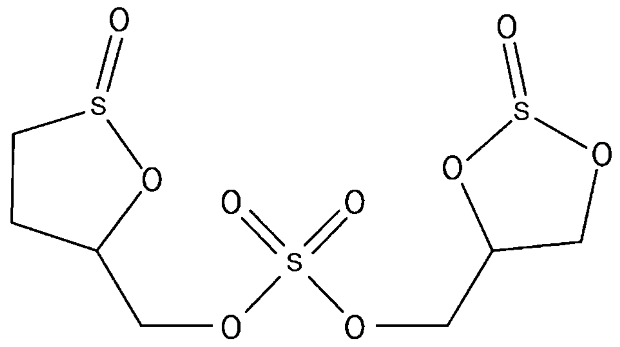

A-16

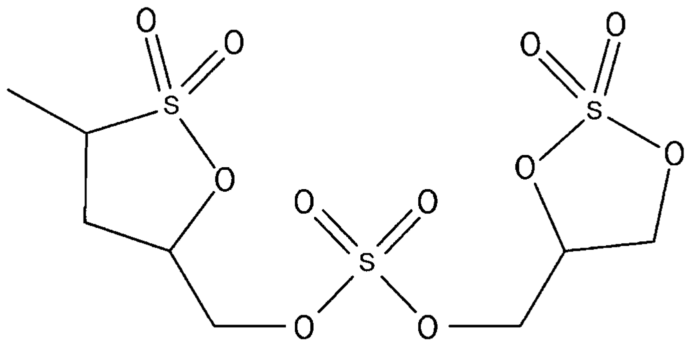

A-17

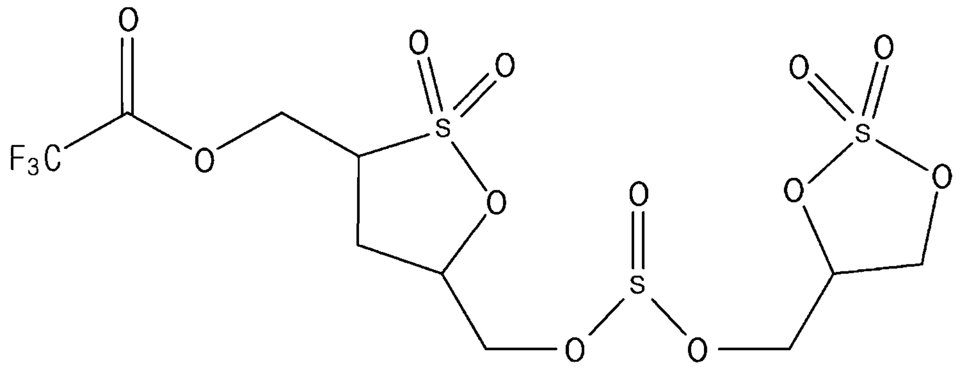

A-18

The compound represented by Formula A above, when having the structure described as preferable above, may form a stable SEI layer with low resistance even with a small amount, compared to additives typically used.

In the non-aqueous electrolyte, the first additive may be included in an amount of 0.1 wt% or greater, 0.5 wt% or greater, 1 wt% or greater, 1.5 wt% or greater, 2 wt% or greater, 2.5 wt% or greater, 3 wt% or greater, 3.5 wt% or greater, 4 wt% or greater, 4.5 wt% or greater, and may be included in an amount of 12 wt% or less, 11.5 wt% or less, 11 wt% or less, 10.5 wt% or less, 10 wt% or less, 9.5 wt% or less, 9 wt% or less, 8.5 wt% or less, 8 wt% or less, 7.5 wt% or less, 7 wt% or less, 6.5 wt% or less, 6 wt% or less, 5.5 wt% or less. For example, the first additive may be included in an amount of 0.01 wt% to 12 wt%, specifically 1 wt% to 11 wt%, more specifically 2 wt% to 10 wt%, even more specifically 3 wt% to 7 wt%, and even more specifically 4 wt% to 6 wt%, with respect to a total weight of the non-aqueous electrolyte. When the above range is satisfied, it is desirable in that the lifespan performance and storage performance of the secondary battery described above are achieved and an increase in resistance resulting from excessive use of additives is prevented.

**4) Second additive**

The second additive includes a compound represented by Formula C below.

| [Formula C]

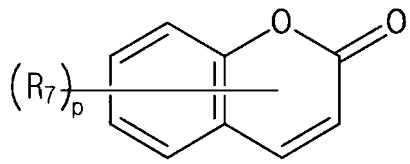

In Formula C above, $R_7$ includes halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and p is an integer selected from 0 to 6.

The compound represented by Formula C included in the second additive, a coumarin-based compound, may have strong reducibility at a negative electrode and thus may undergo rapid ring-opening reactions during the initial formation of an SEI film, thereby forming a PEO-based polymer-type SEI film. The polymer-type SEI film may exhibit excellent flexibility and restorability.

However, when the second additive is used alone, a film formed on positive/negative electrodes may undergo degradation in thermal stability, chemical and electrochemical stability, and durability. For example, when the second additive is used alone, an SEI film exhibiting excellent durability is hardly formed for a negative electrode active material (e.g., a silicon-based active material) that undergoes volume expansion during charge and discharge. In addition, when the second additive is used alone, it may be reduced to form radicals, subsequently attacking the carbonate-based solvent, leading to undesired additional reduction reactions. In this regard, the non-aqueous electrolyte according to the present invention uses a first additive containing cyclic sulfur oxide at both ends in combination with the second additive, and radicals formed by the second additive promotes the ring-opening reaction of the first additive, thereby forming a flexible, resilient, and durable (e.g., thermally stable) film on positive/negative electrodes.

Specifically, the compound represented by Formula A above forms a film on the positive/negative electrodes through the ring-opening reaction of cyclic sulfur oxide, but exhibits low participation in the reaction due to steric hinderance. Therefore, when the compound represented by Formula A above is used alone, forming a desired positive/negative electrode film is hardly achieved due to the low reaction participation. However, according to the present invention, with a combination of the first additive and the second additive applied, radicals are formed from the first additive in an initial activation stage of a lithium secondary battery, and the radicals may promote the ring-opening reaction of the compound represented by Formula A above, and accordingly, a positive/negative electrode film rich in oxygen (O) based on sulfur (S) is quickly and stably formed, thereby obtaining a lithium secondary battery exhibiting excellent lithium mobility characteristics as well as excellent high-temperature life performance and high-temperature storage performance. In addition, with a combination of the first additive and the second additive used, a film having excellent coverage and improved durability may be formed on the positive/negative electrodes due to the formation of radicals through the second additive and the promotion of the ring-opening reaction of the first additive through the radicals, which is preferable.

This combined effect of the first and second additives in enhancing high-temperature lifespan performance and high-temperature storage performance are particularly evident at higher voltages, and in particular, the above-described active material exhibits the effect when the lithium nickel-based oxide represented by Formula 1 above is used as a positive electrode active material.

In Formula C above, $R_7$ is specifically halogen (halogen may be selected from F, Cl, Br, and I, and may specifically be F), a nitrile group, a propargyl group, an ester group, an ether group, or a combination of two or more thereof, and these substituents exhibit excellent reducibility, are favorable in forming a polymer-type SEI layer, and exhibit excellent performance of delivering lithium ions, and thus are preferable.

In Formula C above, p may be an integer selected from 0 to 6, specifically, an integer selected from 1 to 6, and more specifically, p may be 1. In Formula C above, when p is 2 or greater, $R_7$ may each be the same as or different from each other.

Specifically, the compound represented by Formula C above may include at least one selected from the group consisting of a compound represented by Formula C-1 below and a compound represented by Formula C-2 below.

[Formula C-1]

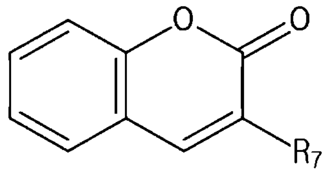

[Formula C-2]

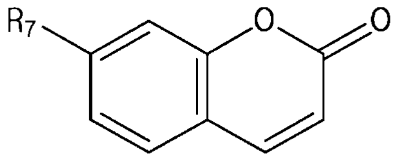

In Formulas C-1 and C-2 above, $R_7$ is the same as defined in Formula C above.

The compounds represented by Formulas C-1 and C-2 above each have a structure in which substituents are present at positions 3 and 7 (in accordance with IUPAC nomenclature) of a ring structure, and in this case, it is preferable in that the compounds are favorable in synthesizing at the position as described above compared to other substitution positions. In particular, in the case of the compound represented by Formula C-1 in which a substituent is present at position 3, it is more preferable in that the uniformity of reactions is improved upon reducing at a negative electrode.

Specifically, the compound represented by Formula C above may include at least one selected from the group consisting of compounds represented by Formulas C-3 to C-11 below. The compound represented by Formula C above may specifically include at least one selected from the group consisting of compounds represented by Formulas C-3 to C-11 below, in view of being more smoothly reduced at a negative electrode and more favorable in forming a polymer-type SEI layer, and may more specifically include at least one selected from the group consisting of Formula C-3, Formula C-4, and Formula C-6 below, and the compound represented by Formula C above may even more specifically include the compound represented by Formula C-3 below, in terms of being highly reducible, and exhibiting an excellent effect of inhibiting transition metal elution along with the above-described effects.

[Formula C-3]

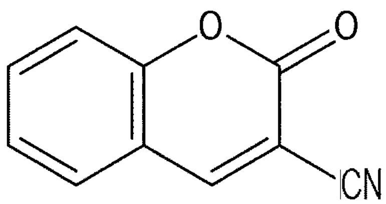

[Formula C-4]

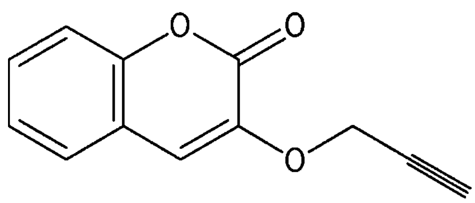

[Formula C-5]

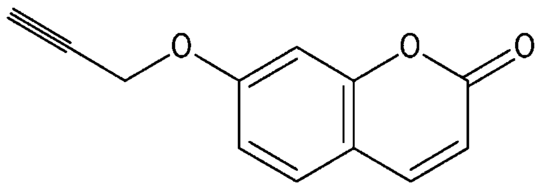

[Formula C-6]

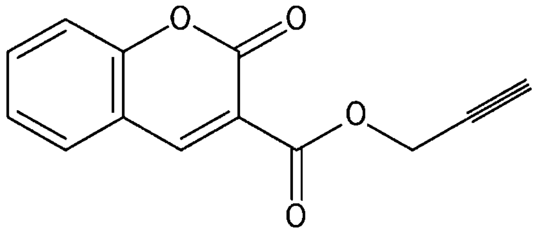

[Formula C-7]

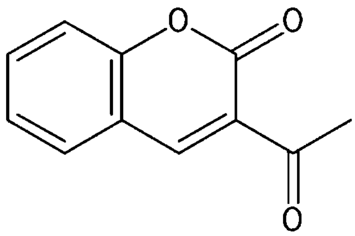

[Formula C-8]

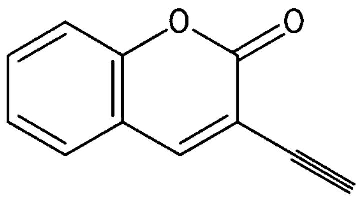

[Formula C-9]

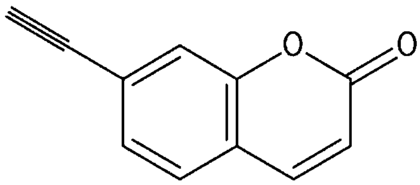

[Formula C-10]

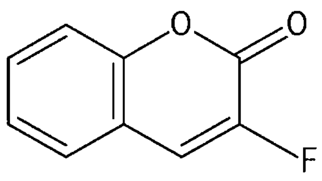

[Formula C-11]

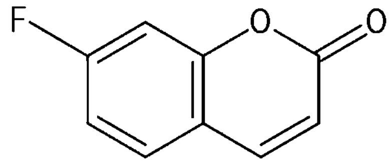

The second additive may be included in an amount of 0.01 wt% or greater, 0.1 wt% or greater, 0.2 wt% or greater, 0.3 wt% or greater, 0.4 wt% or greater, 0.5 wt% or greater, 0.6 wt% or greater, 0.7 wt% or greater, 0.8 wt% or greater, 0.9 wt% or greater, and may be included in an amount of 6 wt% or less, 5.5 wt% or less, 5 wt% or less, 4.5 wt% or less, 4 wt% or less, 3.5 wt% or less, 3 wt% or less, 2.5 wt% or less, 2 wt% or less, 1.5 wt% or less, or 1.3 wt% or less, with respect to a total weight of the non-aqueous electrolyte. For example, the second additive may be included in an amount of 0.01 wt% to 6 wt%, specifically 0.5 wt% to 5 wt%, more specifically 0.6 wt% to 3 wt%, more specifically 0.7 wt% to 2 wt%, and even more specifically 0.8 wt% to 1.3 wt%, with respect to a total weight of the non-aqueous electrolyte. When the amount of the second additive satisfies the above range, it is preferable in terms of sufficiently providing flexibility and restorability to the SEI film, and preventing an increase in resistance of a lithium secondary battery resulting from excessive addition and the subsequent degradation in life performance.

Meanwhile, the first additive and the second additive may be present in a weight ratio of 12:1 to 0.5:1, specifically, 10:1 to 1:1, more specifically, 7:1 to 3:1, and even more specifically, 6:1 to 4:1. When the above range is satisfied, an appropriate amount of positive/negative films may be formed, and an appropriate amount of radicals may be formed to promote the ring-opening reaction of the first additive, thereby accelerating the formation of the film, which may improve high-temperature storage and high-temperature lifespan characteristics.

The non-aqueous electrolyte may further include a third additive along with the first additive and the second additive. The third additive may be included in the non-aqueous electrolyte to prevent negative electrode collapse caused by decomposition of the non-aqueous electrolyte in a high-power setting, achieve low-temperature high-rate discharge characteristics, and high-temperature stability, prevent overcharging, and suppress battery swelling at high temperatures.

Specifically, the third additive may include at least one selected from the group consisting of vinylene carbonate, vinylethylene carbonate, fluoroethylene carbonate, propane sultone, propene sultone, 1,4-butane sultone, ethane sultone, succinonitrile, adiponitrile, ethylene sultone, lithium difluoro phosphate (LiDFP), lithium tetrafluoroborate (LiBF4), lithium difluoro(oxalato)borate (LiODFB), lithium bis-(oxalato)borate (LiBOB), and tris(trimethylsilyl) phosphite (TMSPi).

The non-aqueous electrolyte may include the third additive in an amount of 0.1 wt% to 15 wt%.

The lithium secondary battery of the present invention may have a charge cut-off voltage of 4.3 V or greater, specifically 4.35 V or greater, and more specifically 4.4 V or greater at driving. The lithium secondary battery of the present invention may achieve excellent energy density at high driving voltages and improved high-temperature lifespan performance and high-temperature storage performance, through the combination of a positive electrode and a non-aqueous electrolyte described above.

Meanwhile, the lithium secondary battery may have a nominal voltage of 3.68 V or greater, preferably 3.68 V to 3.80 V, and more preferably 3.69 V to 3.75 V. In this case, the nominal voltage indicates an average voltage value upon discharge of the lithium secondary battery. Since the energy density of the lithium secondary battery is calculated by the product of average voltage and average current upon discharge, energy density increases when the nominal voltage is high. The nominal voltage of a lithium secondary battery using a typical lithium nickel cobalt manganese-based oxide as a positive electrode active material was 3.6 V, but in the present invention, the charge cut-off voltage was increased to set the nominal voltage to be 3.68 V or greater so as to achieve high energy density. Specifically, the lithium secondary battery according to the present invention may have an energy density of 500 Wh/L or greater, 550 Wh/L or greater, or 500 Wh/L to

800 Wh/L.

The outer shape of the lithium secondary battery of the present invention is not particularly limited, but may be a cylindrical shape using a can, a prismatic shape, a pouch shape, or a coin shape.

In addition, the lithium secondary battery according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Therefore, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

## Examples and Comparative Examples

### Example 1

<Preparation of non-aqueous electrolyte>

As an organic solvent, a mixture of ethylene carbonate (EC) and ethylmethyl carbonate (EMC) at a volume ratio of 20:80 was used.

$LiPF_6$ as a lithium salt, Compound A-1 as a first additive, and a compound represented by Formula C-3 below as a second additive were added to the organic solvent to prepare a non-aqueous electrolyte.

[Compound A-1]

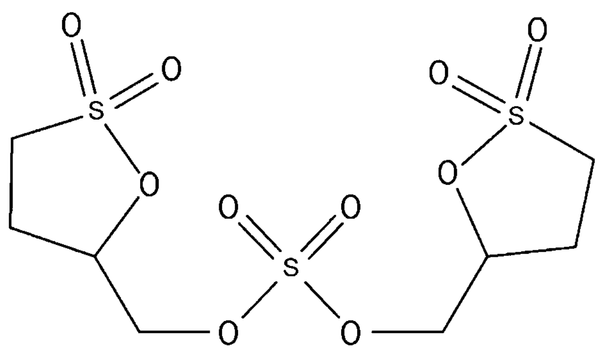

A-1

| [Formula C-3]

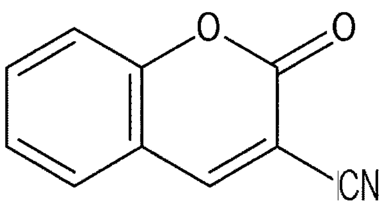

The $LiPF_6$ was included at a molar concentration of 1.2 M in the non-aqueous electrolyte.

The first additive was included in an amount of 5.0 wt% in the non-aqueous electrolyte, and the second additive was included in an amount of 1.0 wt% in the non-aqueous electrolyte.

<Manufacture of lithium secondary battery>

A positive electrode active material ($Li[Ni_{0.6}Co_{0.1}Mn_{0.3}]O_2$), a conductive material (carbon nanotube), and a binder (polyvinylidene fluoride) were added in a weight ratio of 97.74:0.70:1.56 to N-methyl-2-pyrrolidone (NMP) as a solvent to prepare a positive electrode slurry (solid content: 75.5 wt%). The positive electrode slurry was applied onto one surface of a positive electrode current collector (Al thin film) having a thickness of 15 μm, and then dried and roll-pressed to form a positive electrode active material layer (thickness: 136.6 μm), which was used as a positive electrode.

A negative electrode active material (natural graphite), a conductive material (carbon black), and a binder (styrene-butadiene rubber (SBR)-carboxymethyl cellulose (CMC)) were added in a weight ratio of 96.15:1.55:2.30 to distilled water as a solvent to prepare a negative electrode slurry (solid content: 26 wt%). The negative electrode slurry was applied onto one surface of a negative electrode current collector (Cu thin film) having a thickness of 15 μm, and then dried and roll-pressed to form a negative electrode active material layer (thickness: 179.8 μm), which was used as a negative electrode.

A polyethylene porous film separator was disposed between the prepared positive and negative electrodes in a dry room, and then the prepared non-aqueous electrolyte was injected to manufacture a secondary battery.

**Example 2**

A lithium secondary battery was manufactured in the same manner as in Example 1, except that the first additive was added in an amount of 10 wt% instead of 5.0 wt% to the non-aqueous electrolyte.

**Example 3**

A lithium secondary battery was manufactured in the same manner as in Example 1, except that the first additive was added in an amount of 1.0 wt% instead of 5.0 wt% to the non-aqueous electrolyte.

**Example 4**

A lithium secondary battery was manufactured in the same manner as in Example 1, except that the second additive was added in an amount of 0.5 wt% instead of 1.0 wt% to the non-aqueous electrolyte.

**Example 5**

A lithium secondary battery was manufactured in the same manner as in Example 1, except that the second additive was added in an amount of 5.0 wt% instead of 1.0 wt% to the non-aqueous electrolyte.

**Example 6**

A lithium secondary battery was manufactured in the same manner as in Example 1, except that Compound A-4 below was used as the first additive.

[Compound A-4]

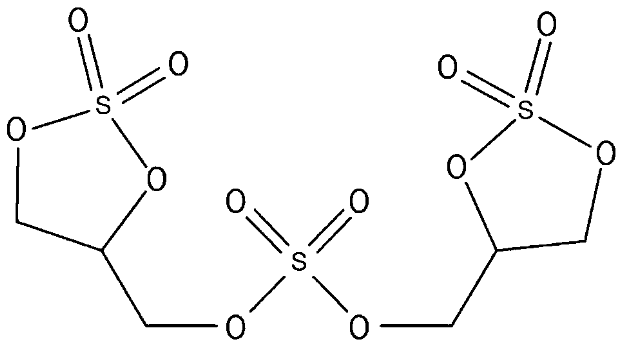

A-4

## Example 7

A lithium secondary battery was manufactured in the same manner as in Example 1, except that a compound represented by Formula C-4-1 below was used as the second additive.

[Formula C-4-1]

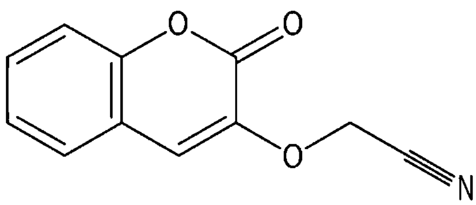

## Example 8

A lithium secondary battery was manufactured in the same manner as in Example 1, except that Compound A-4 above was used as the first additive, and the compound represented by Formula C-4-1 above was used as the second additive.

## Comparative Example 1

A lithium secondary battery was manufactured in the same manner as in Example 1, except that the first additive and the second additive were not added to the non-aqueous electrolyte.

## Comparative Example 2

A lithium secondary battery was manufactured in the same manner as in Example 1, except that the second additive was not added to the non-aqueous electrolyte.

## Comparative Example 3

A lithium secondary battery was manufactured in the same manner as in Example 1, except that the first additive was not added to the non-aqueous electrolyte.

## Comparative Example 4

A lithium secondary battery was manufactured in the same manner as in Example 1, except that $Li[Ni_{0.8}Co_{0.1}Mn_{0.1}]O_2$ was used instead of $Li[Ni_{0.6}Co_{0.1}Mn_{0.3}]O_2$ as a positive electrode active material.

**Comparative Example 5**

A lithium secondary battery was manufactured in the same manner as in Example 1, except that Li $[Ni_{0.8}Co_{0.1}Mn_{0.1}]O_2$ was used instead of $Li[Ni_{0.6}Co_{0.1}Mn_{0.3}]O_2$ as a positive electrode active material, and the second additive was not added to the non-aqueous electrolyte.

**Comparative Example 6**

A lithium secondary battery was manufactured in the same manner as in Example 1, except that Li $[Ni_{0.8}Co_{0.1}Mn_{0.1}]O_2$ was used instead of $Li[Ni_{0.6}Co_{0.1}Mn_{0.3}]O_2$ as a positive electrode active material, and the first additive was not added to the non-aqueous electrolyte.

**Comparative Example 7**

A lithium secondary battery was manufactured in the same manner as in Example 1, except that Li $[Ni_{0.86}Co_{0.05}Mn_{0.08}Al_{0.01}]O_2$ was used instead of $Li[Ni_{0.6}Co_{0.1}Mn_{0.3}]O_2$ as a positive electrode active material.

**Comparative Example 8**

A lithium secondary battery was manufactured in the same manner as in Example 1, except that Li $[Ni_{0.86}Co_{0.05}Mn_{0.08}Al_{0.01}]O_2$ was used instead of $Li[Ni_{0.6}Co_{0.1}Mn_{0.3}]O_2$ as a positive electrode active material, and the second additive was not added to the non-aqueous electrolyte.

**Comparative Example 9**

A lithium secondary battery was manufactured in the same manner as in Example 1, except that Li $[Ni_{0.866}Co_{0.05}Mn_{0.08}Al_{0.01}]O_2$ was used instead of $Li[Ni_{0.6}Co_{0.1}Mn_{0.3}]O_2$ as a positive electrode active material, and the first additive was not added to the non-aqueous electrolyte.

**Comparative Example 10**

A lithium secondary battery was manufactured in the same manner as in Example 1, except that $LiCoO_2$ was used instead of $Li[Ni_{0.6}Co_{0.1}Mn_{0.3}]O_2$ as a positive electrode active material.

**Comparative Example 11**

A lithium secondary battery was manufactured in the same manner as in Example 1, except that $LiCoO_2$ was used instead of $Li[Ni_{0.6}Co_{0.1}Mn_{0.3}]O_2$ as a positive electrode active material, and the second additive was not added to the non-aqueous electrolyte.

**Comparative Example 12**

A lithium secondary battery was manufactured in the same manner as in Example 1, except that $LiCoO_2$ was used instead of $Li[Ni_{0.6}Co_{0.1}Mn_{0.3}]O_2$ as a positive electrode active material, and the first additive was not added to the non-aqueous electrolyte.

**Comparative Example 13**

A lithium secondary battery was manufactured in the same manner as in Example 1, except that Li $[Ni_{0.6}Co_{0.2}Mn_{0.2}]O_2$ was used instead of $Li[Ni_{0.6}Co_{0.1}Mn_{0.3}]O_2$ as a positive electrode active material.

**Comparative Example 14**

A lithium secondary battery was manufactured in the same manner as in Example 1, except that Li $[Ni_{0.6}Co_{0.2}Mn_{0.2}]O_2$ was used instead of $Li[Ni_{0.6}Co_{0.1}Mn_{0.3}]O_2$ as a positive electrode active material, and the second additive was not added to the non-aqueous electrolyte.

**Comparative Example 15**

A lithium secondary battery was manufactured in the same manner as in Example 1, except that Li$[Ni_{0.6}Co_{0.2}Mn_{0.2}]O_2$ was used instead of $Li[Ni_{0.6}Co_{0.1}Mn_{0.3}]O_2$ as a positive electrode active material, and the first additive was not added to the non-aqueous electrolyte.

**Comparative Example 16**

A lithium secondary battery was manufactured in the same manner as in Example 1, except that 1,3-propane sultone was used as the first additive.

[Table 1]

| | Positive electrode active material | Non-aqueous electrolyte | | | |
|---|---|---|---|---|---|
| | Compositi on | Lithiu m salt ($LiPF_6$ ) | Organic solvent | Additive | |
| | | Molar concen tratio n (M) | | 1st additiv e | 2nd additiv e |
| | | | | Amount (wt%, with respect to non-aqueous electro lyte) | Amount (wt%, with respect to non-aqueous electro lyte) |
| Example 1 | $Li[Ni_{0.6}Co_{0.1}Mn_{0.3}]O_2$ | 1.2 | EC:EMC (volume ratio 20:80) | 5.0 | 1.0 |
| Example 2 | $Li[Ni_{0.6}Co_{0.1}Mn_{0.3}]O_2$ | 1.2 | EC:EMC (volume ratio 20:80) | 10.0 | 1.0 |
| Example 3 | $Li[Ni_{0.6}Co_{0.1}Mn_{0.3}]O_2$ | 1.2 | EC:EMC (volume ratio 20:80) | 1.0 | 1.0 |
| Example 4 | $Li[Ni_{0.6}Co_{0.1}Mn_{0.3}]O_2$ | 1.2 | EC:EMC (volume ratio 20:80) | 5.0 | 0.5 |
| Example 5 | $Li[Ni_{0.6}Co_{0.1}Mn_{0.3}]O_2$ | 1.2 | EC:EMC (volume ratio 20:80) | 5.0 | 5.0 |
| Example 6 | $Li[Ni_{0.6}Co_{0.1}Mn_{0.3}]O_2$ | 1.2 | EC:EMC (volume ratio 20:80) | 5.0 | 1.0 |
| Example 7 | $Li[Ni_{0.6}Co_{0.1}Mn_{0.3}]O_2$ | 1.2 | EC:EMC (volume ratio 20:80) | 5.0 | 1.0 |
| Example 8 | $Li[Ni_{0.6}Co_{0.1}Mn_{0.3}]O_2$ | 1.2 | EC:EMC (volume ratio 20:80) | 5.0 | 1.0 |
| Comparative Example 1 | $Li[Ni_{0.6}Co_{0.1}Mn_{0.3}]O_2$ | 1.2 | EC:EMC (volume ratio 20:80) | - | - |

(continued)

| | Positive electrode active material | Non-aqueous electrolyte | | | |
|---|---|---|---|---|---|
| | Compositi on | Lithiu m salt ($LiPF_6$ ) | Organic solvent | Additive | |
| | | Molar concen tratio n (M) | | 1st additiv e | 2nd additiv e |
| | | | | Amount (wt%, with respect to non-aqueous electro lyte) | Amount (wt%, with respect to non-aqueous electro lyte) |
| Comparative Example 2 | $Li[Ni_{0.6}Co_{0.1}Mn_{0.3}]O_2$ | 1.2 | EC:EMC (volume ratio 20:80) | 5.0 | - |
| Comparative Example 3 | $Li[Ni_{0.6}Co_{0.1}Mn_{0.3}]O_2$ | 1.2 | EC:EMC (volume ratio 20:80) | - | 1.0 |
| Comparative Example 4 | $Li[Ni_{0.8}Co_{0.1}Mn_{0.1}]O_2$ | 1.2 | EC:EMC (volume ratio 20:80) | 5.0 | 1.0 |
| Comparative Example 5 | $Li[Ni_{0.8}Co_{0.1}Mn_{0.1}]O_2$ | 1.2 | EC:EMC (volume ratio 20:80) | 5.0 | - |
| Comparative Example 6 | $Li[Ni_{0.8}Co_{0.1}Mn_{0.1}]O_2$ | 1.2 | EC:EMC (volume ratio 20:80) | - | 1.0 |
| Comparative Example 7 | $Li[Ni_{0.86}Co_{0.05}Mn_{0.08}Al_{0.01}]O_2$ | 1.2 | EC:EMC (volume ratio 20:80) | 5.0 | 1.0 |
| Comparative Example 8 | $Li[Ni_{0.86}Co_{0.05}Mn_{0.08}Al_{0.01}]O_2$ | 1.2 | EC:EMC (volume ratio 20:80) | 5.0 | - |
| Comparative Example 9 | $Li[Ni_{0.86}Co_{0.05}Mn_{0.08}Al_{0.01}]O_2$ | 1.2 | EC:EMC (volume ratio 20:80) | - | 1.0 |
| Comparative Example 10 | $LiCoO_2$ | 1.2 | EC:EMC (volume ratio 20:80) | 5.0 | 1.0 |
| Comparative Example 11 | $LiCoO_2$ | 1.2 | EC:EMC (volume ratio 20:80) | 5.0 | - |
| Comparative Example 12 | $LiCoO_2$ | 1.2 | EC:EMC (volume ratio 20:80) | - | 1.0 |
| Comparative Example 13 | $Li[Ni_{0.6}Co_{0.2}Mn_{0.2}]O_2$ | 1.2 | EC:EMC (volume ratio 20:80) | 5.0 | 1.0 |
| Comparative Example 14 | $Li[Ni_{0.6}Co_{0.2}Mn_{0.2}]O_2$ | 1.2 | EC:EMC (volume ratio 20:80) | 5.0 | - |

(continued)

| | Positive electrode active material | Non-aqueous electrolyte | | | |
|---|---|---|---|---|---|
| | Compositi on | Lithiu m salt ($LiPF_6$ ) | Organic solvent | Additive | |
| | | Molar concen tratio n (M) | | 1st additiv e | 2nd additiv e |
| | | | | Amount (wt%, with respect to non-aqueous electro lyte) | Amount (wt%, with respect to non-aqueous electro lyte) |
| Comparative Example 15 | $Li[Ni_{0.6}Co_{0.2}Mn_{0.2}]O_2$ | 1.2 | EC:EMC (volume ratio 20:80) | - | 1.0 |
| Comparative Example 16 | $Li[Ni_{0.6}Co_{0.1}Mn_{0.3}]O_2$ | 1.2 | EC:EMC (volume ratio 20:80) | 5.0 | 1.0 |

**Experimental Example 1: High temperature cycle performance test**

As one cycle, the lithium secondary batteries of Examples 1 to 8 and Comparative Examples 1 to 16 manufactured above were charged up to 4.4 V and 0.05 C in the conditions of CC/CV and 0.33 C at 45 °C using an electrochemical charger and discharger and then discharged up to 2.5 V in the conditions of CC and 0.33 C, which was considered one cycle, and 400 charge-discharge cycles were performed.

(1) Capacity retention

The capacity retention was calculated through the following equation, and the results are shown in Table 2 below.

Capacity retention (%) = {(discharge capacity after 400th cycle)/(discharge capacity after 1st cycle)} × 100

(2) Resistance increase rate

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 400 cycles of charging and discharging, the resistance after 400 cycles was calculated in the same manner as above, the resistance increase rate was calculated using the following equation, and the results are shown in Table 2 below.

Resistance increase rate (%) = (resistance after 400th cycle - initial resistance)/initial resistance × 100

[Table 2]

| | Capacity retention (%) | Resistance increase rate (%) |
|---|---|---|
| Example 1 | 90 | 19 |
| Example 2 | 88 | 20 |
| Example 3 | 88 | 22 |
| Example 4 | 87 | 21 |
| Example 5 | 89 | 23 |

(continued)

| | Capacity retention (%) | Resistance increase rate (%) |
|---|---|---|
| Example 6 | 89 | 20 |
| Example 7 | 88 | 19 |
| Example 8 | 88 | 20 |
| Comparative Example 1 | 55 | 49 |
| Comparative Example 2 | 56 | 45 |
| Comparative Example 3 | 56 | 42 |
| Comparative Example 4 | 67 | 47 |
| Comparative Example 5 | 66 | 47 |
| Comparative Example 6 | 69 | 51 |
| Comparative Example 7 | 64 | 49 |
| Comparative Example 8 | 67 | 48 |
| Comparative Example 9 | 69 | 55 |
| Comparative Example 10 | 65 | 47 |
| Comparative Example 11 | 63 | 50 |
| Comparative Example 12 | 65 | 48 |
| Comparative Example 13 | 57 | 52 |
| Comparative Example 14 | 59 | 50 |
| Comparative Example 15 | 58 | 50 |
| Comparative Example 16 | 54 | 49 |

Referring to Table 2 above, it is determined that the lithium secondary batteries of Examples 1 to 8, in which a positive electrode including $Li[Ni_{0.6}Co_{0.1}Mn_{0.3}]O_2$ as a positive electrode active material and a non-aqueous electrolyte including a first additive and a second additive as additives were combined, exhibited higher capacity retention and a lower resistance increase rate during high-voltage, high-temperature cycle charge and discharge than Comparative Examples 1 to 16. Specifically, Comparative Examples 4 to 6, Comparative Examples 7 to 9, Comparative Examples 10 to 12, and Comparative Examples 13 to 15, in which $Li[Ni_{0.8}Co_{0.1}Mn_{0.1}]O_2$, $Li[Ni_{0.86}Co_{0.03}Mn_{0.08}Al_{0.01}]O_2$, $LiCoO_2$, and $Li[Ni_{0.6}Co_{0.2}Mn_{0.2}]O_2$ were used instead of $Li[Ni_{0.6}Co_{0.1}Mn_{0.3}]O_2$ as the positive electrode active material, exhibited no improvement in high-temperature cycle characteristics even when the first additive and the second additive were used in combination. In particular, it is determined that Comparative Examples 7 and 13, which used a positive electrode with the same positive electrode active material but used a combination of the first and second additives, exhibited a lower capacity retention than Comparative Examples 8 and 9 and 14 and 15, which added either the first additive or the second additive alone. In addition, it is determined that Comparative Example 16, which used 1,3-propane sultone as the first additive, exhibited reduced high-temperature cycle performance.

**Experimental Example 2: High temperature storage performance test**

The lithium secondary batteries of Examples 1 to 8 and Comparative Examples 1 to 16 manufactured above were charged up to 4.4 V and 0.05 C in the conditions of CC/CV and 0.33 C at 25 °C and discharged up to 2.5 V in the conditions of CC and 0.33 C to perform initial charging/discharging, and then charged up to 4.4 V and 0.05 C in the conditions of CC/CV and 0.33 C at 25 °C, and then stored at 60 °C for 20 weeks.

(1) Capacity retention

After storage for 20 weeks, the lithium secondary batteries were charged up to 4.4 V and 0.05 C in the conditions of CC/CV and 0.33 C at 25 °C, and discharged up to 2.5 V in the condition of CC and 0.33 C to measure the capacity during discharge.

The capacity retention was evaluated according to the following formula, and the results are shown in Table 3

below.

Capacity retention (%) = (discharge capacity after storage for 20 weeks/initial discharge capacity)× 100

(2) Resistance increase rate

After the initial charging/discharging, the capacity was determined at room temperature, the lithium secondary batteries were charged at 50% of SOC with respect to the discharge capacity, discharged for 10 seconds at a current of 2.5 C to measure resistance using the voltage drop difference at this point as an initial resistance, and were stored at 60 °C for 20 weeks to measure resistance in the same manner as a final resistance, thereby calculating resistance increase rate using the following equation. The results are shown in Table 3 below.

Resistance increase rate (%) = (final resistance - initial resistance)/(initial resistance) × 100

[Table 3]

| | Capacity retention (%) | Resistance increase rate (%) |
|---|---|---|
| Example 1 | 88 | 18 |
| Example 2 | 86 | 19 |
| Example 3 | 87 | 21 |
| Example 4 | 87 | 21 |
| Example 5 | 86 | 20 |
| Example 6 | 88 | 21 |
| Example 7 | 87 | 20 |
| Example 8 | 87 | 19 |
| Comparative Example 1 | 50 | 40 |
| Comparative Example 2 | 52 | 36 |
| Comparative Example 3 | 50 | 35 |
| Comparative Example 4 | 42 | 58 |
| Comparative Example 5 | 48 | 55 |
| Comparative Example 6 | 48 | 56 |
| Comparative Example 7 | 66 | 50 |
| Comparative Example 8 | 64 | 47 |
| Comparative Example 9 | 64 | 54 |
| Comparative Example 10 | 68 | 44 |
| Comparative Example 11 | 65 | 49 |
| Comparative Example 12 | 66 | 46 |
| Comparative Example 13 | 51 | 45 |
| Comparative Example 14 | 53 | 43 |
| Comparative Example 15 | 53 | 44 |
| Comparative Example 16 | 50 | 49 |

Referring to Table 3 above, it is determined that the lithium secondary batteries of Examples 1 to 8, in which a positive electrode including $Li[Ni_{0.6}Co_{0.1}Mn_{0.3}]O_2$ as a positive electrode active material and a non-aqueous electrolyte including a first additive and a second additive as additives were combined, exhibited higher capacity retention and a lower resistance increase rate at high-temperature storage than Comparative Examples 1 to 16. Specifically, Comparative Examples 4 to 6, Comparative Examples 7 to 9, Comparative Examples 10 to 12, and Comparative Examples 13 to 15, in

which $Li[Ni_{0.8}Co_{0.1}Mn_{0.1}]O_2$, $Li[Ni_{0.86}Co_{0.05}Mn_{0.08}Al_{0.01}]O_2$, $LiCoO_2$, $Li[Ni_{0.6}Co_{0.2}Mn_{0.2}]O_2$, and $Li[Ni_{0.6}Co_{0.2}Mn_{0.2}]O_2$ were used instead of $Li[Ni_{0.6}Co_{0.1}Mn_{0.3}]O_2$ as the positive electrode active material exhibited no improvement in high-temperature cycle characteristics even when the first additive and the second additive were used in combination. In particular, it is determined that Comparative Examples 4 and 13, which used a positive electrode with the same positive electrode active material and used a combination of the first and second additives, respectively, exhibited rather lower effects than Comparative Examples 5 and 6 and 14 and 15, which added either the first additive or the second additive alone. In addition, it is determined that Comparative Example 16, which used 1,3-propane sultone as the first additive, exhibited reduced high-temperature storage performance.

**Experimental Example 3: Hot box test**

The lithium secondary batteries of Examples 1 to 8 and Comparative Examples 1 to 16 manufactured above were charged up to 4.4 V and 0.05 C in the conditions of CC/CV and 0.1 C at 45 °C under a pressure of 50 kgf using an electrochemical charger and discharger, and then discharged up to 2.5 V in the conditions of CC and 0.1 C for activation. Thereafter, the activated lithium secondary batteries of Examples 1 to 8 and Comparative Examples 1 to 16 were charged up to 4.4 V and 0.05 C in the conditions of CC/CV and 0.33 C at 25 °C for full charge up to an SOC of 100%. Each fully charged lithium secondary battery was placed in a hot box chamber at room temperature, heated to 140 °C at a heating rate of 5 °C/min, and left for 1 hour to measure changes in temperature of the battery. When no thermal runaway or ignition occurred during the test, it was marked as Pass, and when thermal runaway and/or ignition occurred, it was marked as Fail. The results are presented in Table 4 below.

[Table 4]

| | Hot box test results |
|---|---|
| Example 1 | Pass |
| Example 2 | Pass |
| Example 3 | Pass |
| Example 4 | Pass |
| Example 5 | Pass |
| Example 6 | Pass |
| Example 7 | Pass |
| Example 8 | Pass |
| Comparative Example 1 | Fail |
| Comparative Example 2 | Fail |
| Comparative Example 3 | Fail |
| Comparative Example 4 | Fail |
| Comparative Example 5 | Fail |
| Comparative Example 6 | Fail |
| Comparative Example 7 | Fail |
| Comparative Example 8 | Fail |
| Comparative Example 9 | Fail |
| Comparative Example 10 | Fail |
| Comparative Example 11 | Fail |
| Comparative Example 12 | Fail |
| Comparative Example 13 | Fail |
| Comparative Example 14 | Fail |
| Comparative Example 15 | Fail |
| Comparative Example 16 | Fail |

Referring to Table 4 above, it is determined that the lithium secondary batteries of Examples 1 to 8, in which a positive electrode including $Li[Ni_{0.6}Co_{0.1}Mn_{0.3}]O_2$ as a positive electrode active material and a non-aqueous electrolyte including a first additive and a second additive as additives were combined, exhibited no ignition according to the results of the hot box test, but the lithium secondary batteries of Comparative Examples 1 to 16 exhibited ignition according to the results of the hot box test.

## Claims

**1.** A lithium secondary battery comprising:

a positive electrode;
a negative electrode;
a separator disposed between the positive electrode and the negative electrode; and
a non-aqueous electrolyte;
wherein the positive electrode comprises a positive electrode active material,
the positive electrode active material comprises a lithium nickel-based oxide represented by Formula 1 below,
the non-aqueous electrolyte comprises a lithium salt, an organic solvent, a first additive, and a second additive,
the first additive comprises a compound represented by Formula A below, and
the second additive comprises a compound represented by Formula C below:

[Formula 1] $Li_{1+x}[Ni_aCo_bMn_cM^1_d]O_2$

wherein in Formula 1 above, x, a, b, c, and d satisfy $0 \leq x \leq 0.5$, $a+b+c+d = 1$, $0.5 \leq a \leq 0.7$, $0 < b < 0.2$, $0 < c \leq 0.4$, and $0 \leq d \leq 0.2$, and
$M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo,

[Formula A]

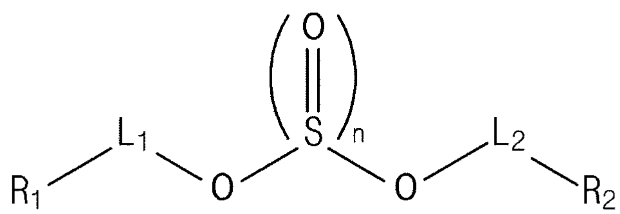

wherein in Formula A above,
n is 1 or 2,
$L_1$ and $L_2$ are each independently a direct linkage or a substituted or unsubstituted alkylene group having 1 to 6 carbon atoms,
$R_1$ and $R_2$ are each independently a substituent represented by Formula B below:

[Formula B]

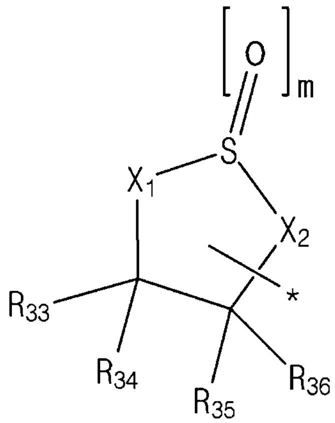

wherein in Formula B above,
m is 1 or 2,
$X_1$ and $X_2$ are each independently -O- or -C($R_{31}$)($R_{32}$)-, provided that at least one of $X_1$ or $X_2$ is -O-,
$R_{31}$ to $R_{36}$ are each independently hydrogen, an alkyl group having 1 to 6 carbon atoms, -C(=O)-$R_4$, or -$R_5$-O-C(=O)-$R_6$,
$R_4$ and $R_6$ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms,
$R_5$ is a substituted or unsubstituted alkylene group having 1 to 6 carbon atoms,
substituents of $L_1$, $L_2$, $R_4$, $R_5$, and $R_6$ are each independently at least one selected from the group consisting of deuterium, -F, -Cl, -Br, -I, -CN, -$NO_2$, and -$SO_3$,
* is a site bonded to $L_1$ or $L_2$,
when both $L_1$ and $L_2$ are direct linkages, both $R_1$ and $R_2$ are not CS-7 below, and
when both $L_1$ and $L_2$ are methylene groups and n is 2, both $R_1$ and $R_2$ are not CS-2 below:

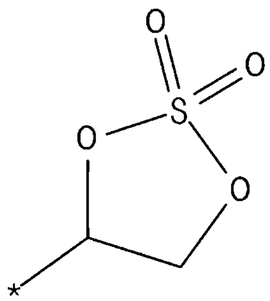

CS-2

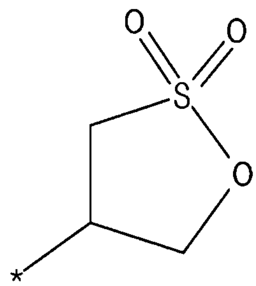

CS-7

[Formula C]

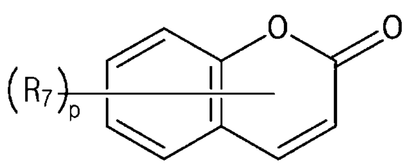

wherein in Formula C above,
$R_7$ comprises halogen, a nitrile group, a propargyl group, an ester group, an ether group, a ketone group, a carboxy group, a substituted or unsubstituted alkyl group, a substituted or unsubstituted alkenyl group, a substituted or unsubstituted alkynyl group, a substituted or unsubstituted alkoxy group, a boron group, a borate

group, an isocyanate group, an isothiocyanate group, a silyl group, a siloxane group, a sulfone group, a sulfonate group, a sulfate group, or a combination of two or more thereof, and
p is an integer selected from 0 to 6.

**2.** The lithium secondary battery of claim 1, wherein in Formula 1 above, a/b is 3.2 to 9.0.

**3.** The lithium secondary battery of claim 1, wherein in Formula 1 above, a/c is 1.5 to 2.8.

**4.** The lithium secondary battery of claim 1, wherein in Formula 1 above, x, a, b, c, and d satisfy $0 \leq x \leq 0.2$, $a+b+c+d = 1$, $0.55 \leq a \leq 0.65$, $0 < b \leq 0.15$, $0.2 \leq c \leq 0.4$, $0 \leq d \leq 0.1$, $4.0 \leq a/b \leq 8.5$, and $1.6 \leq a/c \leq 2.6$.

**5.** The lithium secondary battery of claim 1, wherein in Formula A above, $R_1$ and $R_2$ are each independently a substituent selected from the group consisting of CS-1 to CS-15 below:

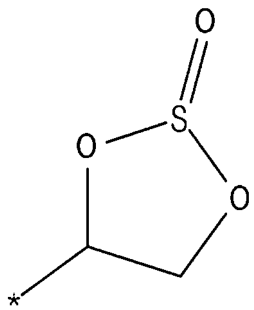
CS-1

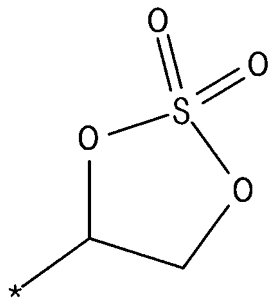
CS-2

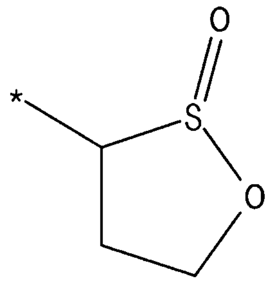
CS-3

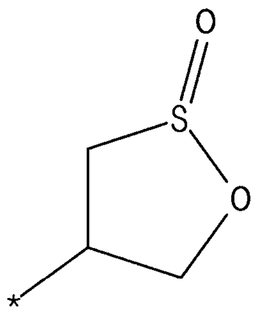
CS-4

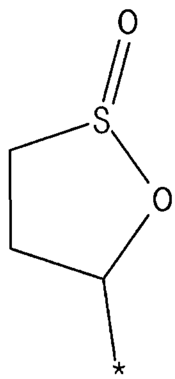
CS-5

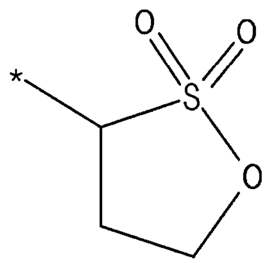
CS-6

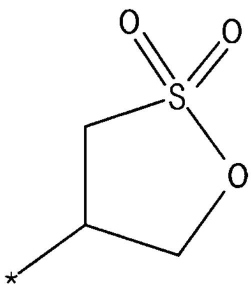
CS-7

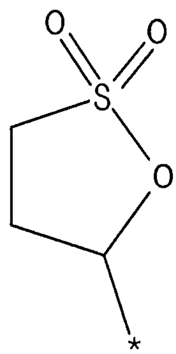
CS-8

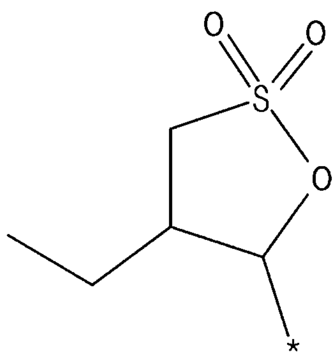
CS-9

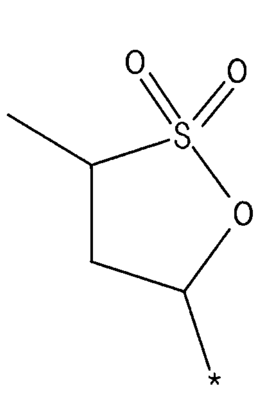

CS-10

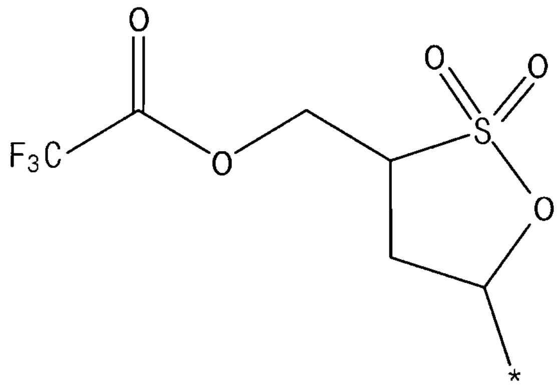

CS-11

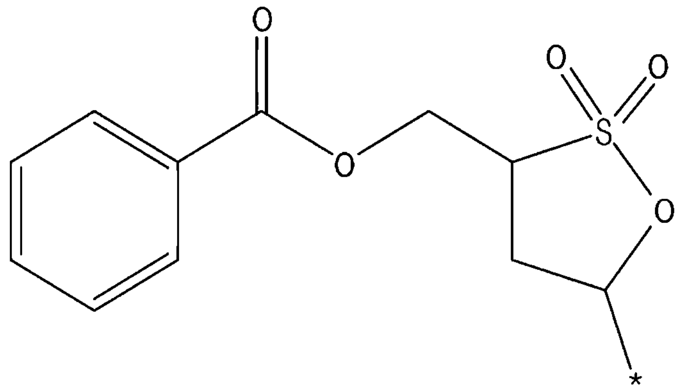

CS-12

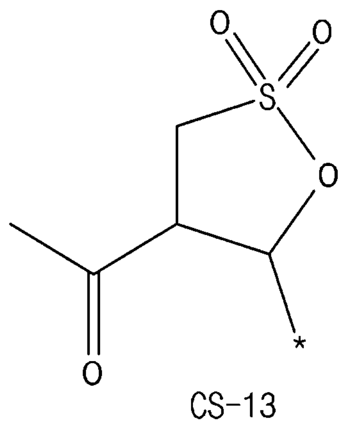

CS-13

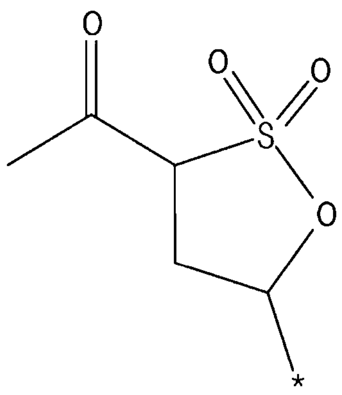

CS-14

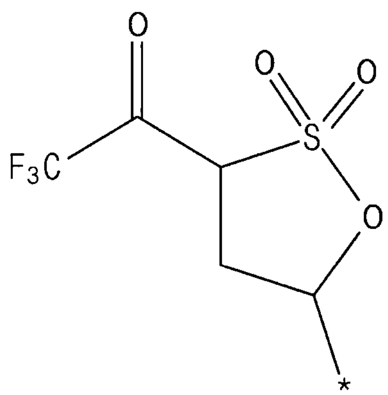

CS-15

6. The lithium secondary battery of claim 5, wherein $R_1$ and $R_2$ are each independently a substituent selected from the group consisting of CS-1, CS-2, CS-5, CS-8, CS-10, and CS-11.

7. The lithium secondary battery of claim 1, wherein $L_1$ and $L_2$ are methylene groups.

8. The lithium secondary battery of claim 1, wherein the compound represented by Formula A above comprises at least one selected from the group consisting of compounds A-1 to A-18 below:

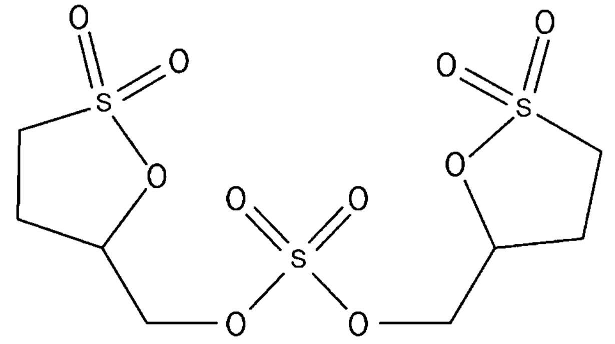

A-1

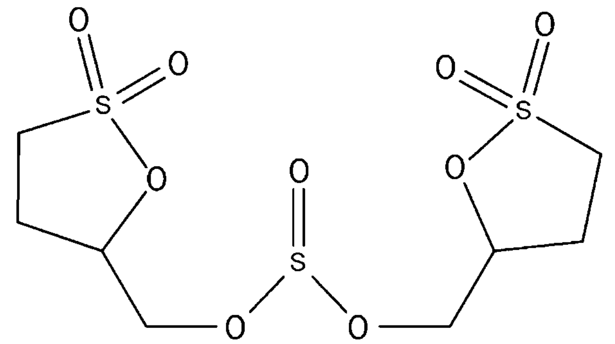

A-2

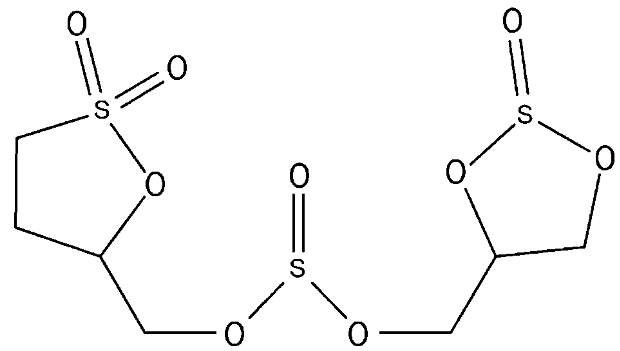

A-3

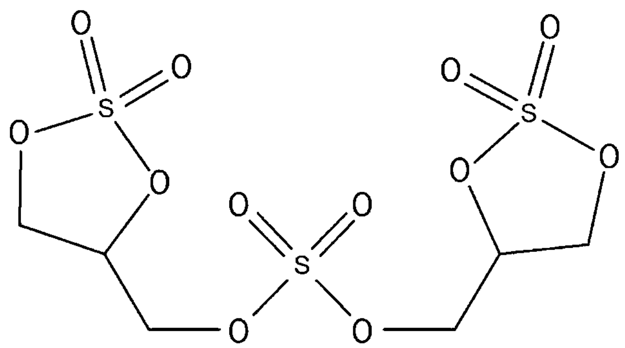

A-4

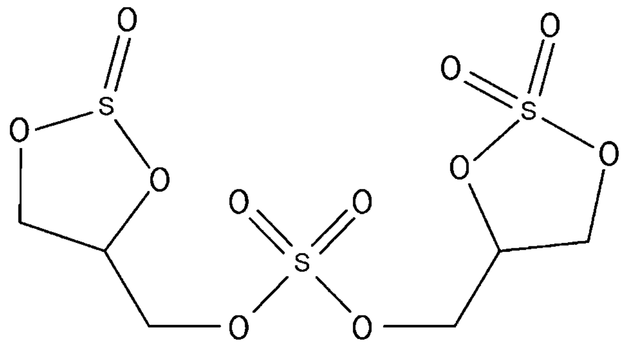

A-5

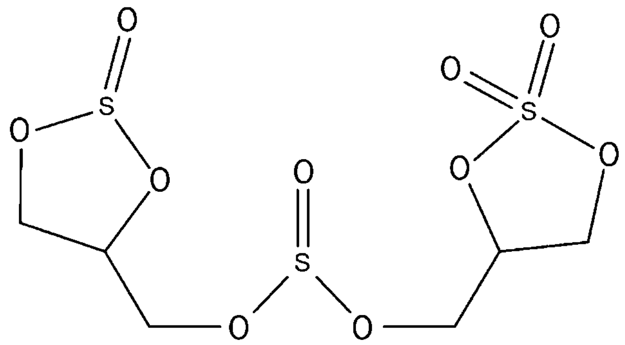

A-6

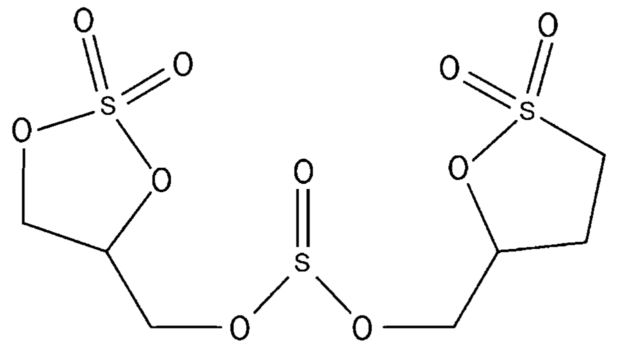

A-7

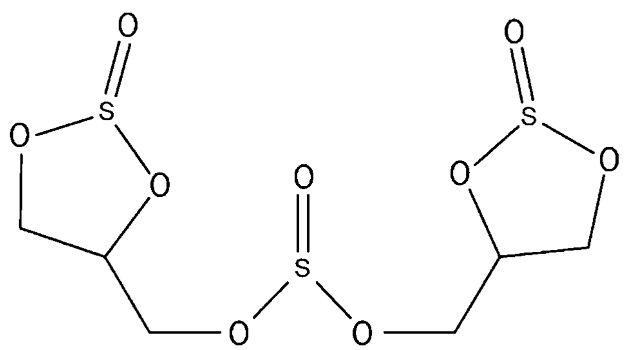

A-8

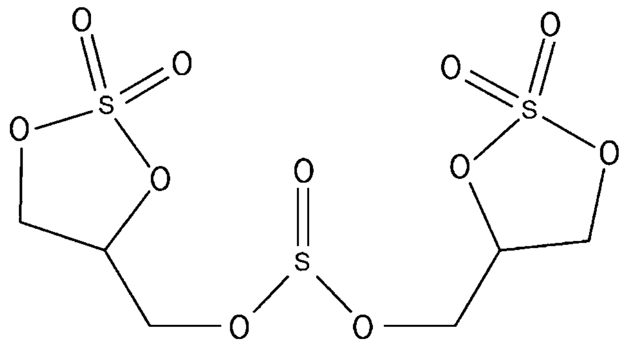

A-9

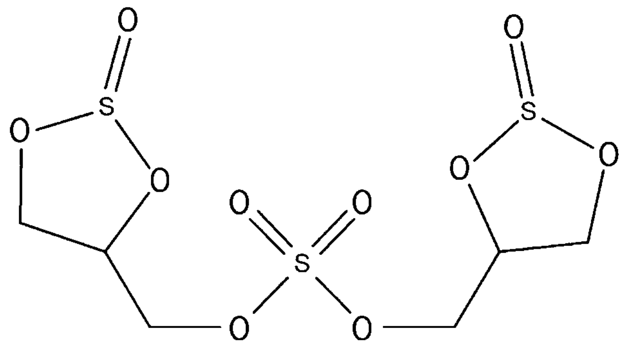

A-10

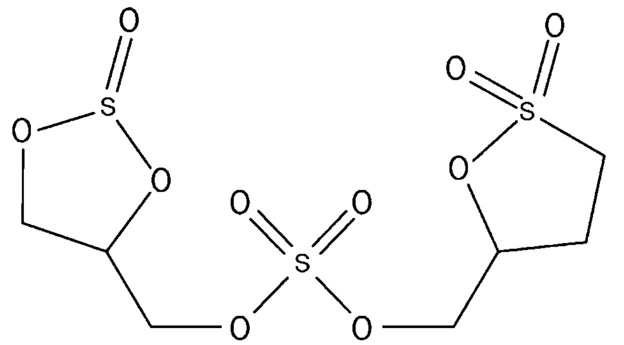

A-11

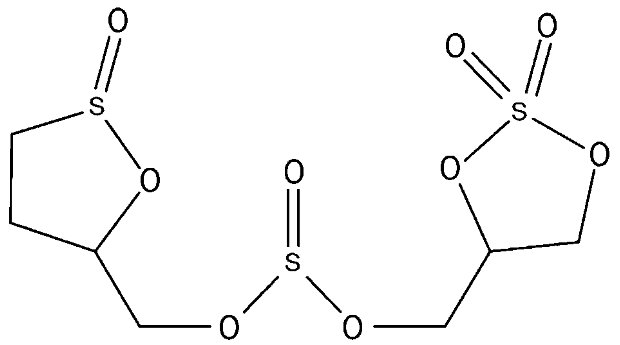

A-12

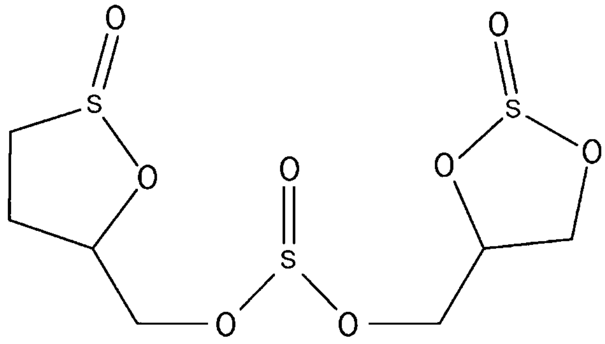

A-13

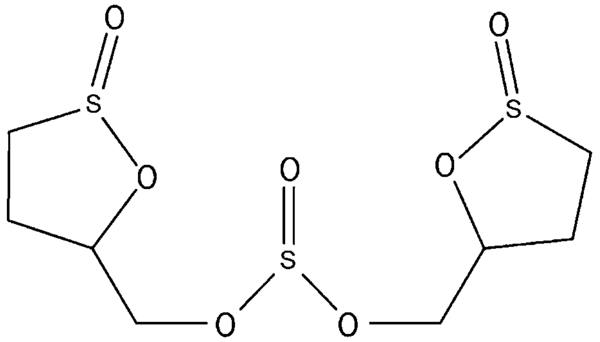

A-14

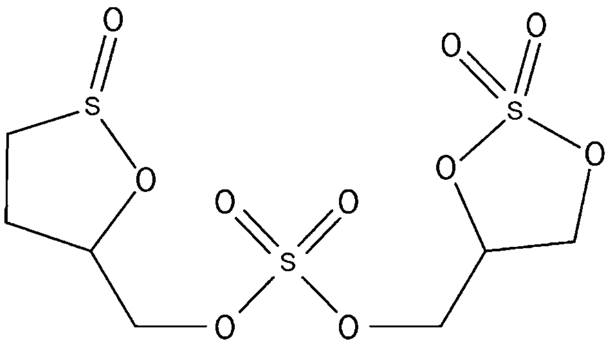

A-15

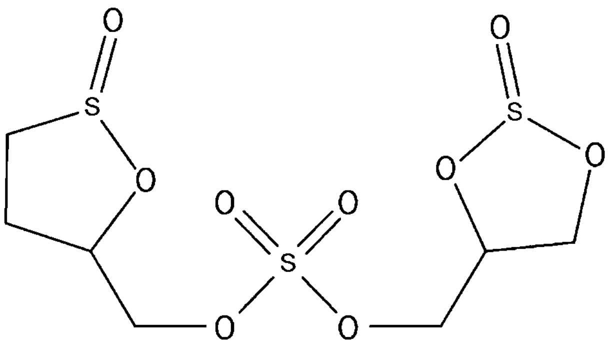

A-16

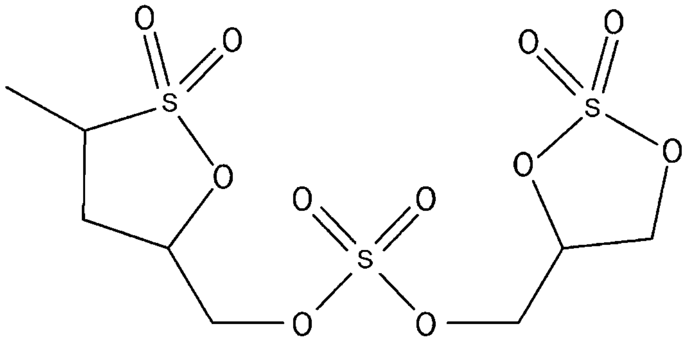

A-17

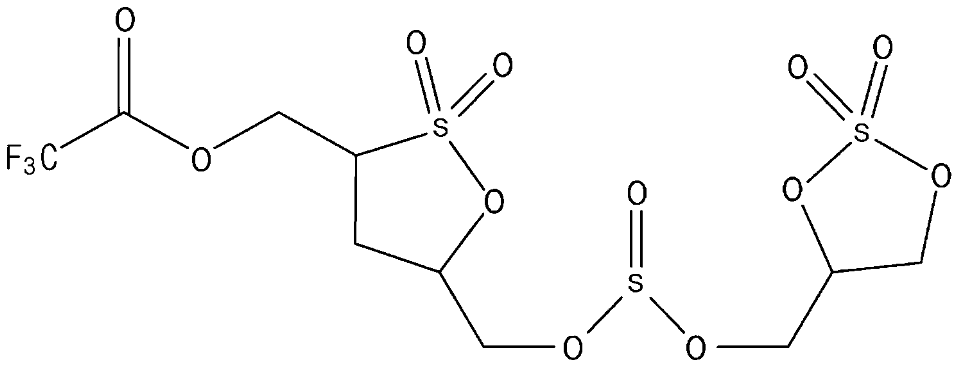

A-18

9. The lithium secondary battery of claim 1, wherein the compound represented by Formula C above comprises at least one selected from the group consisting of a compound represented by Formula C-1 below and a compound represented by Formula C-2 below:

[Formula C-1]

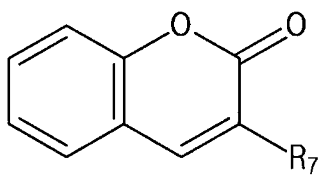

[Formula C-2]

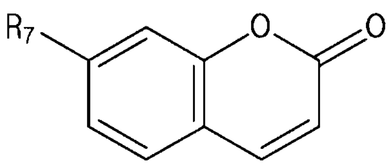

wherein in Formulas C-1 and C-2 above, $R_7$ is the same as defined in Formula C above.

10. The lithium secondary battery of claim 1, wherein the compound represented by Formula C above comprises at least one selected from the group consisting of compounds represented by Formulas C-3 to C-11 below:

[Formula C-3]

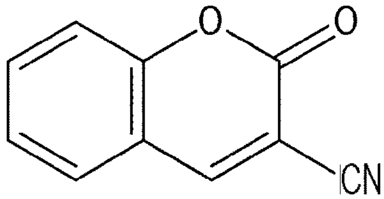

[Formula C-4]

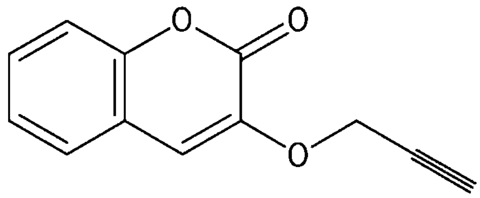

[Formula C-5]

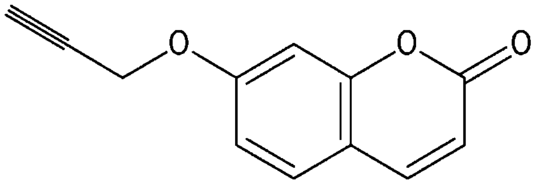

[Formula C-6]

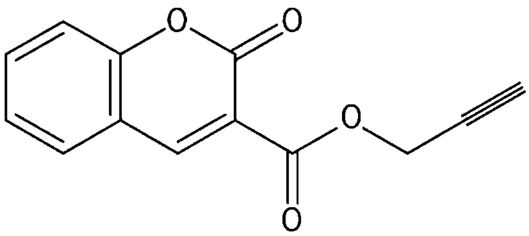

[Formula C-7]

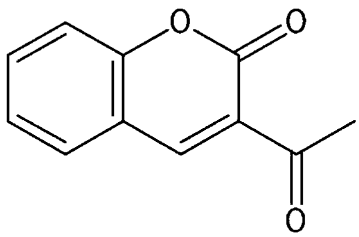

[Formula C-8]

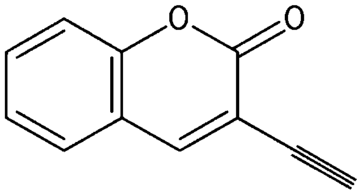

[Formula C-9]

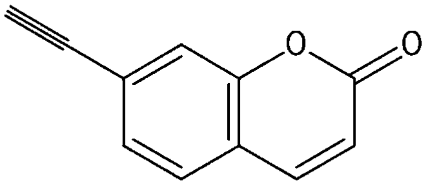

[Formula C-10]

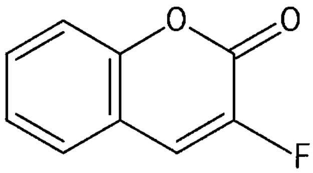

[Formula C-11]

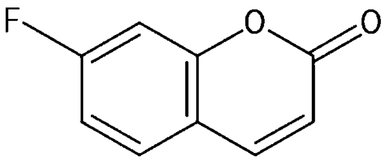

.

**11.** The lithium secondary battery of claim 1, wherein the first additive and the second additive are present in a weight ratio of 12:1 to 0.5:1.

**12.** The lithium secondary battery of claim 1, wherein the first additive is provided in an amount of 0.01 wt% to 12 wt% with respect to a total weight of the non-aqueous electrolyte.

**13.** The lithium secondary battery of claim 1, wherein the second additive is provided in an amount of 0.01 wt% to 6 wt% with respect to a total weight of the non-aqueous electrolyte.

**14.** The lithium secondary battery of claim 1, having a charge cut-off voltage of 4.3 V or greater upon driving.

**15.** The lithium secondary battery of claim 1, having a nominal voltage of 3.68 V or greater.

## INTERNATIONAL SEARCH REPORT

International application No.
**PCT/KR2024/013838**

**A. CLASSIFICATION OF SUBJECT MATTER**

**H01M 4/525**(2010.01)i; **H01M 4/505**(2010.01)i; **H01M 10/0567**(2010.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); H01M 10/052(2010.01); H01M 10/0567(2010.01); H01M 10/0569(2010.01); H01M 4/36(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 첨가제(additive), 설페이트(sulfate), 쿠마린(coumarin)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0022112 A (LG ENERGY SOLUTION, LTD.) 14 February 2023 (2023-02-14)<br>See claims 1, 5-7 and 11; paragraphs [0016], [0082]-[0087], [0095], [0106] and [0107]; and example 1. | 1-15 |
| Y | KR 10-2022-0135208 A (LG CHEM, LTD. et al.) 06 October 2022 (2022-10-06)<br>See claims 1 and 5-8; and paragraph [0048]. | 1-15 |
| A | WO 2022-143188 A1 (SHENZHEN CAPCHEM TECHNOLOGY CO., LTD.) 07 July 2022 (2022-07-07)<br>See claims 1, 6 (compound 4) and 8-10. | 1-15 |
| A | KR 10-2014-0031233 A (UBE INDUSTRIES, LTD.) 12 March 2014 (2014-03-12)<br>See claims 1 and 12-14. | 1-15 |
| A | KR 10-2022-0029518 A (LG ENERGY SOLUTION, LTD.) 08 March 2022 (2022-03-08)<br>See claims 1, 3, 5 and 10. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/013838**

| Patent document cited in search report | Publication date (day/month/year) | Patent family member(s) | Publication date (day/month/year) |
|---|---|---|---|
| KR 10-2023-0022112 A | 14 February 2023 | CA 3221195 A1 | 09 February 2023 |
| | | CN 117337507 A | 02 January 2024 |
| | | EP 4329038 A1 | 28 February 2024 |
| | | EP 4329038 A4 | 23 October 2024 |
| | | JP 2024-521798 A | 04 June 2024 |
| | | KR 10-2603188 B1 | 17 November 2023 |
| | | US 11862764 B2 | 02 January 2024 |
| | | US 2023-0090340 A1 | 23 March 2023 |
| | | WO 2023-014079 A1 | 09 February 2023 |
| KR 10-2022-0135208 A | 06 October 2022 | CN 116491005 A | 25 July 2023 |
| | | EP 4213265 A1 | 19 July 2023 |
| | | EP 4213265 A4 | 17 April 2024 |
| | | JP 2023-545066 A | 26 October 2023 |
| | | US 2024-0014443 A1 | 11 January 2024 |
| | | WO 2022-211425 A1 | 06 October 2022 |
| WO 2022-143188 A1 | 07 July 2022 | CN 114695869 A | 01 July 2022 |
| | | EP 4273962 A1 | 08 November 2023 |
| | | US 2024-0097187 A1 | 21 March 2024 |
| KR 10-2014-0031233 A | 12 March 2014 | BR 112013027300 A2 | 24 September 2019 |
| | | CA 2834137 A1 | 01 November 2012 |
| | | CN 103493280 A | 01 January 2014 |
| | | CN 103493280 B | 02 March 2016 |
| | | EP 2704246 A1 | 05 March 2014 |
| | | EP 2704246 A4 | 07 January 2015 |
| | | EP 2704246 B1 | 23 August 2017 |
| | | JP 6036687 B2 | 30 November 2016 |
| | | RU 2013152324 A | 10 June 2015 |
| | | US 2014-0093787 A1 | 03 April 2014 |
| | | US 9608287 B2 | 28 March 2017 |
| | | WO 2012-147818 A1 | 01 November 2012 |
| KR 10-2022-0029518 A | 08 March 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230131252
- KR 1020240118849